# EUROPÄISCHE PATENTSCHRIFT

(11) **EP 3 658 787 B1**
(45) Veröffentlichungstag und Bekanntmachung des Hinweises auf die Patenterteilung: **13.01.2021**
(21) Anmeldenummer: 18795384.9
(22) Anmeldetag: 22.10.2018
(51) Int. Cl.: F16B 5/06, F16B 17/00, F16B 33/00

(54) **FORMBAUTEIL, VERFAHREN ZUR VERBINDUNG VON ZUMINDEST EINEM BLECHBAUTEIL MIT EINEM FORMBAUTEIL UND SYSTEM EINER BLECHKONSTRUKTION**
SHAPED COMPONENT, METHOD FOR CONNECTING AT LEAST ONE METAL-SHEET COMPONENT TO A SHAPED COMPONENT, AND SYSTEM OF A METAL-SHEET CONSTRUCTION
COMPOSANT MOULÉ, PROCÉDÉ SERVANT À ASSEMBLER AU MOINS UN COMPOSANT EN TÔLE À UN COMPOSANT MOULÉ, ET SYSTÈME DE CONSTRUCTION D'UNE TÔLE

(30) Priorität: 23.10.2017 DE 102017124708
(43) Veröffentlichungstag der Anmeldung: 03.06.2020
(73) Patentinhaber: Pflitsch GmbH & Co. KG., 42499 Hückeswagen (DE)
(72) Erfinder: SCHMITZ, Roland, 51688 Wipperfürth (DE)
(74) Vertreter: Geskes, Christoph
(86) Internationale Anmeldenummer: PCT/EP2018/078887
(87) Internationale Veröffentlichungsnummer: WO 2019/081426

(56) Entgegenhaltungen:
- EP-A1- 0 461 974
- EP-A1- 1 225 000
- EP-A2- 0 232 799
- WO-A1-00/04295
- US-A- 1 637 652
- US-A- 2 568 139
- US-A- 2 857 665
- US-A- 2 996 790
- US-A- 3 190 250
- RICHTER ET AL: "Bauelemente der Feinmechanik", BAUELEMENTE DER FEINMECHANIK, XX, XX, 1. Januar 1959 (1959-01-01), Seiten 151-156, XP002198593,

## Beschreibung

Die Erfindung betrifft ein Formbauteil, ein Verfahren zur Verbindung zumindest zweier Kabelführungsbauteile mit einem als Verbindungselement ausgestalteten Formbauteil und ein System einer Blechkonstruktion zumindest umfassend ein erstes Kabelführungsbauteil und zumindest ein Formbauteil.

Aus dem Stand der Technik sind Formbauteile, die zur Verbindung von Kabelführungsbauteilen, insbesondere Kabelkanälen, vorgesehen sind, allgemein bekannt. DE 20 106 642 U1 beschreibt beispielsweise eine Vorrichtung zur Verbindung von rinnenförmigen Formteilen, die im Querschnitt U-förmig ausgebildet sind und deren Schenkel nahe der Basis der U-Form in Längsrichtung des Formteils verlaufende, nach innen ragende Sicken aufweisen. Verbinder sind dabei als flache Platten ausgebildet, die in der Nähe einer Längsrandkante eine durchgehende Längssicke aufweisen. Diese Verbinder werden mittels Schrauben an zwei im Stoß aneinander grenzenden Formteilen verbunden.

WO 00/04295 A1 beschreibt eine Verbindung für senkrecht aufeinander stehende Metallbleche. Mittels Verdrehen einer über eine Kante des Metallbleches hinausstehenden Lasche wird das die Lasche aufweisende Blech mit einem senkrecht dazu angeordnetem Blech, das eine korrespondierende Öffnung aufweist, verspannt.

EP 0 461 974 A1 offenbart ein Band für Kabelkanäle, die in Abständen perforiert sind, mit mindestens zwei von einer Platte vorstehenden Verriegelungslaschen, die in Längsrichtung voneinander beabstandet sind und jeweils dazu bestimmt sind, mit zwei zu verbindenden Abschnitten des Kabelkanals zusammenzuwirken.

EP 0 232 799 A2 offenbart eine Befestigungsvorrichtung, insbesondere zur Befestigung von Leitungssteuergeräten an Elektrogeräten mit zwei aneinander zu befestigenden Verbindungsflanschen, die mindestens zwei im Abstand zueinander liegende Paare aus jeweils einer in Steckrichtung frei ausragenden Stecklasche und einer komplementären Stecköffnung aufweisen.

Nachteil der aus dem Stand der Technik bekannten Verbindungen von Kabelführungsbauteilen ist, dass eine Schraubverbindung einen großen Aufwand bei der Installation bedingt. Des Weiteren sind Schraubverbindungen auch wegen der zusätzlichen Teile, die hierzu notwendig sind, insbesondere bei großen Projekten, kostenintensiv.

Aufgabe der Erfindung ist es daher, eine Möglichkeit zur Verbindung von Kabelführungsbauteilen zu schaffen, die die aus Stand der Technik bekannten Nachteile überkommt. Insbesondere ist es Aufgabe der Erfindung, eine verbesserte Vorrichtung, ein verbessertes Verfahren sowie ein verbessertes System zur Verfügung zu stellen.

Die Aufgabe wird erfindungsgemäß mittels eines Formbauteils als Verbindungselement zur Verbindung zweier Kabelführungsbauteile umfassend ein Grundblech und zumindest zwei Torsionslaschen gelöst, wobei die Torsionslaschen einen Torsionsbereich und einen Laschenkopf aufweisen, wobei eine Erstreckung des Torsionsbereiches senkrecht zu einer Mittellängsachse der Torsionslaschen kleiner ist als eine Erstreckung des Laschenkopfes senkrecht zu einer Mittellängsachse der Torsionslaschen, und wobei der Laschenkopf einen Spannbereich umfasst und wobei die Torsionslaschen aus dem Grundblech herausgelöst sind und aus einer Grundblechebene hervor ragen. Weiterhin wird die Aufgabe erfindungsgemäß mittels eines Verfahrens zur Verbindung zumindest eines zweier Kabelführungsbauteile mit vorstehendem, als Verbindungselement ausgestalteten Formbauteil gelöst, wobei zumindest eine erste Torsionslasche des Formbauteils durch eine erste Ausnehmung eines ersten Kabelführungsbauteils geführt wird, wobei die erste Torsionslasche um etwa 10° bis etwa 170° um ihre Mittellängsachse tordiert wird, wobei ein Laschenkopf der ersten Torsionslasche derart mit dem ersten Kabelführungsbauteil zusammenwirkt, dass der Laschenkopf das erste Kabelführungsbauteil mit einem Grundblech des Formbauteils verspannt und zumindest eine zweite Torsionslasche des Formbauteils durch eine zweite Ausnehmung eines zweiten Kabelführungsbauteils geführt wird, wobei die zweite Torsionslasche um etwa 10° bis etwa 170° um ihre Mittellängsachse tordiert wird, wobei der Laschenkopf der zweiten Torsionslasche derart mit dem zweiten Kabelführungsbauteil zusammenwirkt, dass der Laschenkopf das zweite Kabelführungsbauteil mit dem Grundblech des Formbauteils verspannt. Weiterhin wird die Aufgabe erfindungsgemäß gelöst mittels eines Systems einer Blechkonstruktion zumindest umfassend ein erstes Kabelführungsbauteil, ein zweites Kabelführungsbauteil und zumindest wie vorstehend beschrieben ausgebildetes ein Formbauteil, wobei zumindest eine erste Torsionslasche des Formbauteils durch zumindest eine erste Ausnehmung eines ersten Kabelführungsbauteils ragt und derart um etwa 10° bis etwa 170° um eine Mittellängsachse tordiert ist, dass ein Laschenkopf der ersten Torsionslasche derart mit dem ersten Kabelführungsbauteil zusammenwirkt, dass ein Grundblech des Formbauteils mit dem ersten Kabelführungsbauteil verspannt ist, wobei zumindest eine zweite Torsionslasche des Formbauteils durch zumindest eine zweite Ausnehmung des zweiten Kabelführungsbauteils ragt und derart um etwa 10° bis etwa 170° tordiert ist, dass ein Laschenkopf der zweiten Torsionslasche derart mit dem zweiten Kabelführungsbauteil zusammenwirkt, dass ein Grundblech des Formbauteils mit dem zweiten Kabelführungsbauteil verspannt ist.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, insbesondere ist ein Toleranzbereich von ±20 %, bevorzugt ±10 %, weiter bevorzugt ±5 % vorgesehen.

Es wird ein Formbauteil als Verbindungselement zur Verbindung zweier Kabelführungsbauteile umfassend ein Grundblech und zumindest zwei Torsionslaschen vorgeschlagen, wobei die Torsionslaschen einen Torsionsbereich und einen Laschenkopf aufweisen, wobei eine Erstreckung des Torsionsbereiches senkrecht zu einer Mittellängsachse der Torsionslaschen kleiner ist als eine Erstreckung des Laschenkopfes senkrecht zu einer Mittellängsachse der Torsionslaschen, und wobei der Laschenkopf einen Spannbereich umfasst und wobei die Torsionslaschen aus dem Grundblech herausgelöst sind und aus einer Grundblechebene hervor ragen.

Das Formbauteil ist insbesondere ein Bauteil aus einem metallischen Blech. Vorzugsweise umfasst das Formbauteil ein Material ausgewählt aus einer Gruppe zumindest umfassend Stahl, Edelstahl, Aluminium, Weißblech, Kupfer und/oder Messing auf. In einer weiteren Ausführungsform umfasst das Formbauteil einen Kunststoff, insbesondere einem thermoplastischen Kunststoff, weiter bevorzugt einen intrinsisch leitenden Kunststoff. In einer Ausführungsform ist das Formbauteil mit einem Kunststoff zumindest teilweise beschichtet. In einer Ausgestaltung ist das Formbauteil zumindest teilweise aus Kunststoff geformt. Insbesondere ist in einer Ausführungsform vorgesehen, dass unter dem Begriff "Blech" jegliche im Wesentlichen im Wesentlichen flächige Erstreckung zu verstehen ist, insbesondere unabhängig von dem Material der flächigen Erstreckung.

In einer weiteren Ausführungsform ist vorgesehen, dass das Formbauteil zumindest eine elektrische Leiterbahn aufweist. Insbesondere ist die zumindest eine elektrische Leiterbahn derart angeordnet, dass mittels dieser eine elektrisch leitfähige Verbindung mit zumindest einem Kabelführungsbauteil herstellbar ist. In einer weiteren Ausgestaltung ist vorgesehen, dass insbesondere das Formbauteil an sich, bevorzugt ein Material des Formbauteils, elektrisch leitend ist. In einer weiteren Ausgestaltung ist vorgesehen, dass zumindest eine Oberfläche zumindest teilweise elektrisch leitend ausgestaltet ist. Vorteilhafterweise ist mittels einer elektrischen Leitfähigkeit des Formbauteils eine elektrisch leitende Verbindung zwischen zumindest einem Kabelführungsbauteil und dem Formbauteil oder zwischen zwei Formbauteilen herstellbar. Insbesondere ist ein Potentialausgleich zwischen Kabelführungsbauteil und Formbauteil mittels einer elektrischen Verbindung herstellbar. In einer weiteren Ausgestaltung ist vorgesehen, dass das Formbauteil insbesondere in Verbindung mit zumindest einem weiteren Formbauteil und/oder zumindest einem Kabelführungsbauteil elektrische Eigenschaften entsprechend DIN EN 61537:2007 aufweist. Insbesondere ist mittels des Formbauteils ein Poteintialausgleich und/oder zumindest eine Verbindung mit der Erde erzeugbar. In einer Ausführungsform ist vorgesehen, dass mittels der Torsionslaschen ein Potentialausgleich insbesondere mit der Erde oder zwischen zumindest einem Kabelführungsbauteil und dem Formbauteil oder zwischen zwei Formbauteilen herstellbar ist.

Beispielsweise ist eine elektrische Leitfähigkeit zwischen zwei Kabelführungsbauteilen und dem Formbauteil oder zwischen zwei Formbauteilen gegeben, die eine Impedanz von kleiner oder gleich 50 mΩ über einer Verbindungstelle aufweist, wobei ein Wechselstrom von 25 A ± 1 A mit einer Frequenz von 50 Hz bis 60 Hz aus einer Spannungsquelle, mit einer Leerlaufspannung von nicht mehr als 12 V, über die Verbindungstelle der zwei Kabelführungsbauteile und dem Formbauteil oder zwischen zwei Formbauteilen angelegt wird, wobei ein Spannungsfall zwischen zwei Punkten, die 50 mm von jeder Seite der Verbindungstelle entfernt sind, gemessen wird. Die Verbindungsstelle ist insbesondere der Überlappungsbereich des Formbauteils mit den Kabelführungsbauteilen oder der beiden Formbauteile.

Erfindungsgemäß umfasst das Formbauteil ein Grundblech und die zumindest zwei Torsionslaschen, wobei die Torsionslaschen aus dem Grundblech herausgelöst, insbesondere ausgestanzt, gefräst oder ausgesägt, sind. In einer vorteilhaften Ausgestaltung sind die Torsionslaschen einstückig mit dem Grundblech verbunden. Im Sinne der Erfindung ist unter dem Grundblech ein Bauteil oder ein Abschnitt eines Bauteiles zu verstehen, das als Grund für ein weiteres Bauteil wirkt, aber auch ein Bauteil oder ein Abschnitt eines Bauteils, aus dem ein weiteres Bauteil heraus gelöst und insbesondere mit diesem materialverbunden ist. In einer Ausgestaltung ist das Grundblech eine Wandung, eine Erstreckung oder ein Boden eines Formbauteils.

Einstückig im Sinn der Erfindung bedeutet, dass die Teile im Wesentlichen aus einem Werkstück geformt beziehungsweise hergestellt sind. Insbesondere bedeutet einstückig, dass die beiden Teile im Wesentlichen materialverbunden sind.

In einer Ausgestaltung ist vorgesehen, dass die mindestens zwei Torsionslaschen mit dem Grundblech materialverbunden sind, das heißt einstückig ausgestaltet. Insbesondere sind die mindestens zwei Torsionslaschen aus einem Grundmaterial des Grundbleches herausgelöst, bevorzugt ausgestanzt. Weiter bevorzugt ist die Torsionslasche zumindest teilweise zumindest einfach gebogen.

Der Begriff "im Wesentlichen" gibt einen Toleranzbereich an, der für den Fachmann unter wirtschaftlichen und technischen Gesichtspunkten zu vertreten ist, so dass das entsprechende Merkmal noch als solches zu erkennen und/oder verwirklicht ist.

In einer Ausgestaltung ist vorgesehen, dass die zumindest eine Torsionslasche eine Geometrie aufweist, die ein Tordieren der Torsionslasche insbesondere um eine Mittellängsachse dieser erlaubt. Besonders vorteilhaft ist in einer Ausgestaltung vorgesehen, dass der Torsionsbereich der Torsionslasche mit dem Grundblech verbunden ist. Besonders vorteilhaft ist in einer Ausgestaltung vorgesehen, dass der Torsionsbereich senkrecht zur Mittellängsachse die Hälfte, bevorzugt ¼, weiter bevorzugt 1/8, der Erstreckung des Laschenkopfes senkrecht zur Mittellängsachse beträgt. Insbesondere ist vorgesehen, dass die Erstreckungen senkrecht zur Mittellängsachse auch senkrecht zur Materialstärke der Torsionslasche ist.

Besonders bevorzugt ist das Formbauteil aus einem Teil beziehungsweise einem Werkstück gefertigt. Das Werkstück ist insbesondere ein Blech, bevorzugt ein metallisches Blech. In einer weiteren Ausgestaltung ist vorgesehen, dass das Werkstück gestanzt ist, insbesondere um das Formbauteil zumindest teilweise zu bilden. Insbesondere ist eine Außenkontur des Formbauteils im Wesentlichen durch Stanzen geformt. In einer weiteren Ausführungsform weist das Formbauteil eine Prägung auf. In einer Ausgestaltung ist vorgesehen, dass die Torsionslasche ausgestanzt ist. In einer Ausgestaltung ist die Torsionslasche insbesondere materialschlüssig an dem Grundblech angeordnet. Insbesondere ist die Torsionslasche mit dem Torsionsbereich an dem Grundblech angeordnet. In einer weiteren Ausführungsform ist die Ausstanzung der Torsionslasche derart erfolgt, dass die Torsionslasche mit dem Torsionsbereich an dem Grundblech angeordnet ist.

In einer Ausgestaltung ist vorgesehen, dass die Torsionslasche aus der Ebene des Grundblechs herausgebogen beziehungsweise heraus abgekantet ist.

In einer weiteren Ausgestaltung ist vorgesehen, dass die Mittellängsachse der Torsionslasche zu einer Grundblechebene einen Winkel von etwa 30° bis etwa 150°, bevorzugt etwa 80° bis etwa 100°, weiter bevorzugt etwa 90° aufweist. Erfindungsgemäß ragen die Torsionslaschen aus der Grundblechebene hervor. Vorteilhaft an einer aus der Grundblechebene heraus gebogenen Torsionslasche ist, dass diese in eine korrespondierende Ausnehmung einfach eingeführt werden kann, ohne dass die Torsionslasche aufwändig insbesondere unter Zuhilfenahme von Werkzeug in eine passende Position gebogen werden muss.

Im Sinne der Erfindung ist unter einer Grundblechebene eine Ebene zu verstehen, die zu dem im Wesentlichen ebenen Grundblech oder einem im Wesentlichen ebenen Grunblechabschnitt parallel ist. Vorzugsweise ist die Grundblechebene eine im Wesentlichen ebene Oberfläche oder ein im Wesentlichen ebener Oberflächenabschnitt des Grundbleches.

In einer weiteren Ausführungsform ist vorgesehen, dass das Formbauteil zumindest zwei, bevorzugt vier, Torsionslaschen aufweist. Vorzugsweise sind die zwei Torsionslaschen, insbesondere deren Laschenköpfe, insbesondere im untordierten Zustand, im Wesentlichen parallel zueinander angeordnet. In einer weiteren Ausgestaltung ist vorgesehen, dass zumindest zwei Torsionslaschen, insbesondere deren Laschenköpfe, insbesondere im untordierten Zustand, im Wesentlichen senkrecht zueinander angeordnet sind. In einer weiteren Ausführungsform ist vorgesehen, dass zumindest zwei Torsionslaschen, insbesondere deren Laschenköpfe, insbesondere im untordierten Zustand, in einem Winkel von etwa 30° bis etwa 60°, bevorzugt etwa 45° zueinander angeordnet sind. Eine nicht parallele Anordnung der Torsionslaschen zueinander hat den Vorteil, dass eine definierte Positionierung des Formbauteils beispielsweise an einem Kabelführungsbauteil ermöglicht wird, insbesondere wenn kein Positioniermittel vorgesehen ist.

In einer weiteren Ausgestaltung ist vorgesehen, dass sich die Torsionslaschen auf der gleichen oder auf gegenüberliegenden Seiten des Grundblechs von der Grundblechebene hinweg erstrecken. Dies kann insbesondere zur Verbindung von parallel angeordneten Bauteilen genutzt werden. Beispielsweise ist in einer Ausgestaltung vorgesehen, dass auf der ersten Grundblechseite ein erstes Kabelführungsbauteil montierbar ist und auf der zweiten Grundblechseite ein zweites Kabelführungsbauteil montierbar ist, so dass die Kabelführungsbauteile mit Abstand der Materialstärke des Grundblechs im Bereich des Grundblechs voneinander mittels des Formteils aneinander befestigt sind.

In einer weiteren beispielhaften Ausgestaltung wird das Formbauteil verwendet, um zwei Kabelführungsbauteile auf Stoß miteinander zu verbinden. Hierzu wird eine erste Torsionslasche in einer Ausnehmung eines ersten Kabelführungsbauteils gesteckt und eine zweite Torsionslasche in eine weitere Ausnehmung eines zweiten Kabelführungsbauteils gesteckt. Die Torsionslaschen werden im Folgenden verdreht, das heißt tordiert, wobei eine Torsion im Wesentlichen im Torsionsbereich stattfindet. Besonders bevorzugt ist durch die Verdrehung eine formschlüssige Verbindung hergestellt. In einer weiteren bevorzugten Ausgestaltung ist vorgesehen, dass der Spannbereich des Laschenkopfes durch Verdrehen desselben auf das Kabelführungsbauteil wirkt, so dass das Formbauteil beziehungsweise die Grundblech des Formbauteils mit den Kabelführungsbauteilen verspannt ist.

In einer Ausführungsform ist mittels der Verspannung von Formbauteil und Grundblech eine insbesondere sichere elektrische leitende Verbindung herstellbar. Vorteilhafterweise ist mittels der Verspannung ein Potentialausgleich zwischen dem Formteil und dem Kabelführungsbauteil herstellbar. In einer weiteren Ausführungsform ist vorgesehen, dass eine elektrisch leitende Verbindung des Grundblechs und/oder der Torsionslasche mit dem Kabelführungsbauteil vorgesehen ist, die insbesondere durch die Verspannung sicher Kontakt hält.

Der Laschenkopf weist einen Spannbereich auf. Insbesondere ist der Laschenkopf aufgeteilt in einen Spannbereich und in einen Griffbereich. In einer Ausgestaltung weist der Laschenkopf einen Griffbereich auf, der bevorzugt derart ausgestaltet ist, dass dieser mit einer Werkzeugöffnung eines weiteren oder sonstigen, gegebenenfalls auch alternativen Formbauteils, mit einer Elektrikerzange und/oder Backenzange leicht greifbar ist.

In einer weiteren Ausgestaltung umfasst der Laschenkopf im Wesentlichen nur einen Spannbereich. Der Spannbereich ist in einer Ausgestaltung derart ausgeführt, dass die Wangen des Spannbereiches im Wesentlichen oder teilweise bei einer erfindungsgemäß vorgesehenen Einbausituation des Formbauteils im Wesentlichen zum Grundblech hinweisen. Insbesondere ist in einer Ausgestaltung vorgesehen, dass der Spannbereich in Richtung der Mittellängsachse von dem Torsionsbereich weg eine zunehmend größer werdende Erstreckung senkrecht zu einer Mittellängsachse aufweist. In einer weiteren Ausgestaltung ist vorgesehen, dass zumindest eine Wange bevorzugt zumindest in einem Abschnitt des Spannbereichs einen Winkel zur Grundblechebene von etwa 5° bis etwa 80°, bevorzugt etwa 7° bis etwa 60°, weiter bevorzugt etwa 10° bis etwa 35°, weiter bevorzugt etwa 12° bis etwa 28°, aufweist. In einer weiteren Ausführungsform ist vorgesehen, dass zumindest eine Wange bevorzugt zumindest in einem Abschnitt des Spannbereichs einen Winkel zur Mittellängsachse der Torsionslasche von etwa 20° bis etwa 85, bevorzugt etwa 30° bis etwa 83°, weiter bevorzugt etwa 62° bis etwa 78° beträgt, wobei der Scheitel des Winkels dem Torsionsbereich zugeordnet ist und der Winkel sich vom Laschenkopf in Richtung des Grundbleches öffnet. Die Torsion kann vorzugsweise in beliebige Richtung erfolgen.

Die Torsionslasche weist einen Torsionsbereich und einen Laschenkopf auf. Der Laschenkopf weist eine maximale Erstreckung auf, die wesentlich breiter ist als eine maximale Erstreckung des Torsionsbereichs. Der Laschenkopf weist in einer Ausführungsform zusätzlich zudem einen Spannbereich auf, der sich ausgehend vom Torsionsbereich in Richtung der Mittellängsachse von dem Torsionsbereich weg, vorzugsweise stetig, verbreitert. In einer beispielhaften Ausführungsform sind die Wangen des Spannbereichs in einem Längsschnitt in einer Aufsicht gerade angeordnet ausgeführt. Die Wangen weisen in einer beispielhaften Ausführungsform einen Winkel zur Grundblechebene auf, der vorzugsweise etwa 10° bis etwa 30° beträgt. Der Torsionsbereich umfasst in einer Ausgestaltung einen Fußbereich, der insbesondere eine Abkantung beziehungsweise ein gebogener Abschnitt ist, wobei der Fußbereich vorzugsweise mit dem Grundblech, weiter bevorzugt einstückig beziehungsweise materialverbunden, ist. Weiter bevorzugt umfasst der Fußbereich einen Abschnitt, der in der Grundblechebene angeordnet ist. In einer weiteren Ausführungsform ist vorgesehen, dass eine Federkraft, respektive eine Federkonstante, des Torsionsbereichs, insbesondere vor und/oder nach einer Tordierung desselben, mittels einer Länge des Fußbereiches justierbar ist, der in der Grundblechebene liegt. Insbesondere sind Schlitze im Grundblech dem Torsionsbereich, insbesondere dem Fußbereich, zugeordnet. In einer weiteren Ausgestaltung ist der Fußbereich in Richtung der materialschlüssigen Verbindung mit dem Grundblech trapezförmig ausgestaltet. Insbesondere ist eine Basis der Trapezform der materialschlüssigen Verbindung dem Grundblech zugeordnet. In einer weiteren Ausführungsform ist der Fußbereich, insbesondere der Teil des Fußbereiches, der in der Grundblechebene angeordnet ist, rechteckig ausgestaltet.

Der Torsionsbereich ist insbesondere der Abschnitt der Torsionslasche, der sich bei der Tordierung der Torsionslasche um die Mittellängsachse zumindest teilweise verformt. Je nach Torsion der Torsionslasche kann eine Verformung auch im Laschenkopf, insbesondere im Spannbereich, bevorzugt in dem Torsionsbereich angrenzenden Bereichs des Spannbereichs erfolgen. Der Spannbereich ist in einer Ausgestaltung derart ausgestaltet, dass er nach der Torsion der Torsionslasche zumindest in einem Teilbereich einen maximaler Abstand aufweist, der einer zu erwartenden Blechdicke b des Kabelführungsbauteils entspricht, das mit dem Formteil verbindbar ist. Durch die beispielhafte Ausführungsform, insbesondere durch die winklig zur Grundblechebene angeordnete Wange des Spannbereichs, können unterschiedliche Kabelführungsbauteile mit unterschiedlichen Blechdicken b mit dem Formteil verbunden werden.

Im Sinne der Erfindung ist eine "Wange" des Spannbereiches eine sich über die Materialdicke des Laschenkopfes, insbesondere sich senkrecht zu einer flächigen Erstreckung der Torsionslasche, erstreckende Oberfläche. Die Wange erstreckt sich insbesondere zwischen dem Torsionsbereich und einem Bereich des Laschenkopfes, der im Wesentlichen keine sich vergrößernde Erstreckung in Richtung der Längsachse der Torsionslasche vom Torsionsbereich weg aufweist. Insbesondere ist die Wange des Spannbereichs der Bereich des Laschenkopfes, der auf ein Kabelführungsbauteil wirkt, wenn die Torsionslasche tordiert wird. In einer Ausgestaltung sind die Wangen des Spannbereiches derart ausgestaltet, dass mittels dieser eine Kraft auf ein Kabelführungsbauteil einbringbar ist. In einer weiteren Ausgestaltung ist vorgesehen, dass der Spannbereich Wangen aufweist, die sich in einem Längsschnitt linear erstrecken. In einer weiteren Ausgestaltung ist vorgesehen, dass die Wangen in einem Längsschnitt gebogen ausgebildet sind. Insbesondere weist der Spannbereich eine Materialstärke auf, die der Materialstärke des Grundblechs entspricht.

In einer weiteren Ausgestaltung ist vorgesehen, dass der Laschenkopf verdrehbar ist. In einer weiteren Ausgestaltung ist vorgesehen, dass durch Verdrehen des Laschenkopfes der Torsionsbereich tordierbar ist. In einer weiteren Ausgestaltung ist vorgesehen, dass durch Verdrehung des Laschenkopfes der Spannbereich zumindest teilweise tordierbar ist.

Im Sinne der Erfindung ist unter einer Torsion eine Verdrehung eines Körpers oder eines Körperabschnittes verstanden, die durch die Wirkung eines Torsionsmomentes auf diesen Körper oder Körperabschnitt wirkt.

In einer weiteren Ausgestaltung ist vorgesehen, dass der Torsionsbereich und der Laschenkopf im Wesentlichen die gleiche Materialstärke aufweisen. Insbesondere ist in einer Ausgestaltung vorgesehen, dass der Torsionsbereich eine Länge in Richtung der Mittellängsachse von etwa 2 mm bis etwa 15 mm, bevorzugt etwa 2 mm bis etwa 10 mm, weiter bevorzugt etwa 2 mm bis etwa 6 mm, weiter bevorzugt etwa 5 mm, aufweist. In einer weiteren Ausgestaltung ist vorgesehen, dass der Torsionsbereich eine Länge in Richtung der Mittellängsachse von etwa dem 0,5-fachen bis etwa dem 2-fachen der Materialstärke des Grundbleches, bevorzugt etwa dem 0,5-fachen bis etwa dem 1,5-fachen der Materialstärke des Grundbleches, weiter bevorzugt etwa dem 0,5-fachen bis etwa einer Materialstärke des Grundbleches, weiter bevorzugt etwa dem 0,5-fachen bis etwa drei Viertel der Materialstärke des Grundbleches, weiter bevorzugt etwa eine halbe Materialstärke des Grundbleches, aufweist.

Unter Materialstärke wird im Sinne der Erfindung die Dicke des Formbauteils oder des Kabelführungsbauteils an einer bestimmten Stelle verstanden. Vorzugsweise ist die Materialstärke an jeder Stelle des Formbauteils im Wesentlichen gleich. In einer weiteren Ausgestaltung ist vorgesehen, dass an tordierten und/oder gebogenen Stellen des Formbauteils die Materialstärke von der Materialstärke eines ungebogenen oder untordierten Grundbleches abweicht.

In einer Ausführungsform ist vorgesehen, dass der Torsionsbereich derart gestaltet ist, dass dieser sich in Richtung der Mittellängsachse bei der Torsion verkürzt. Insbesondere ist in einer Ausführungsform vorgesehen, dass bei einer Montage eines Kabelführungsbauteils mit einer größeren Materialstärke eine Torsion um einen kleineren Winkel erfolgt, als bei einem Kabelführungsbauteil mit einer geringeren Materialstärke. Vorzugsweise wird die Torsionslasche bei einem Kabelführungsbauteil mit einer größeren Materialstärke weniger stark verdreht als bei einem Kabelführungsbauteil mit geringerer Materialstärke, um das Kabelführungsbauteil mit dem Grundblech mit einer im Wesentlichen gleichen Kraft zu verspannen.

In einer weiteren Ausgestaltung ist vorgesehen, dass die Torsionslasche mit einem Moment von etwa 0,3 Nm bis etwa 5 Nm, bevorzugt etwa 0,5 Nm bis etwa 3 Nm, weiter bevorzugt etwa 1,5 Nm bis etwa 2 Nm, etwa 45° tordierbar ist. Insbesondere ist der Laschenkopf der Torsionslasche mit einem Moment von etwa 0,3 Nm bis etwa 5 Nm, bevorzugt etwa 0,5 Nm bis etwa 3 Nm, weiter bevorzugt etwa 1,5 Nm bis etwa 2 Nm, um etwa 45° verdrehbar.

In einer weiteren Ausgestaltung ist vorgesehen, dass das Grundblech zumindest ein Schraubloch aufweist. Das zumindest eine Schraubloch ist in einer Ausführungsform eine durchgängige Öffnung, die kein Gewinde aufweist. In einer weiteren Ausgestaltung weist das zumindest eine Schraubloch ein Gewinde auf. In einer weiteren Ausgestaltung ist vorgesehen, dass das Schraubloch einer Torsionslasche zugeordnet ist. Insbesondere ist das Schraubloch in der Nähe der Torsionslasche angeordnet. In einer weiteren Ausgestaltung ist vorgesehen, dass das Schraubloch, insbesondere ein der Torsionslasche am nächsten liegender Abschnitt oder Punkt des Umfangs des Schraubloches, mit einem Abstand, der kleiner ist als der Radius des Schraublochs, von der Torsionslasche, insbesondere von dem Torsionsbereich, beabstandet ist. In einer weiteren Ausführungsform ist vorgesehen, dass ein Abstand von einem Mittelpunkt des Schraubloches zur Torsionslasche kleiner ist als das 1,5-fache des Durchmessers des Schraubloches. In einer weiteren Ausgestaltung ist das Schraubloch dem Torsionsbereich der Torsionslasche zugeordnet. In einer weiteren Ausführungsform ist vorgesehen, dass der Abstand eines Mittelpunkts des Schraublochs zur insbesondere untordierten Torsionslasche etwa eine halbe Sechskant-Schlüsselweite beträgt, die mit einem Nenndurchmesser des Schraubloches korreliert.

Im Sinne der Erfindung ist die Schlüsselweite der Abstand zweier im Wesentlichen paralleler Flächen, insbesondere eines Werkzeuges zur Drehmomentübertragung, mittels Formschluss. Bevorzugt ist die Schlüsselweite die Nennweite eines Schraubenschlüssels für Sechskantschrauben oder Muttern. Das Verhältnis des Nenndurchmessers des Schraubenlochs zur Schlüsselweite ist insbesondere in der DIN EN 24014 in Verbindung mit DIN EN 24017 von Februar 1992 definiert. Beispielsweise ist bei einem Nenndurchmesser des Schraubloches von 3 mm eine Nennschlüsselweise 5,5 mm vorgesehen, bevorzugt ist bei einem Nenndurchmesser des Schraubloches von 5 mm eine Nennschlüsselweite von 8 mm vorgesehen, weiter bevorzugt ist bei einem Nenndurchmesser des Schraubloches von 6 mm eine Nennschlüsselweite von 10 mm vorgesehen, weiter bevorzugt ist bei einem Nenndurchmesser des Schraubloches von 8 mm eine Schlüsselweite von einer Nennschlüsselweite von 13 mm vorgesehen. Insbesondere ist die Torsionslasche zum Schraubloch derart angeordnet, dass diese als Verdrehschutz für eine Sechskantschraube oder eine Mutter wirkt.

In einer weiteren Ausgestaltung ist vorgesehen, dass durch Biegen der zumindest einen Torsionslasche aus der Grundblechebene heraus eine Öffnung gebildet ist. In einer Ausführungsform ist vorgesehen, dass die Öffnung als Schraubloch ausgestaltet ist. Insbesondere ist die Öffnung im Wesentlichen rund. In einer Ausgestaltung weist die Öffnung etwa einen Durchmesser auf, der einem Nenndurchmesser eines Schraubloches entspricht. In einer weiteren Ausführungsform ist vorgesehen, dass der Abstand eines Mittelpunkts der Öffnung zur insbesondere untordierten Torsionslasche etwa eine halbe Sechskant-Schlüsselweite beträgt, die mit einem Nenndurchmesser der Öffnung korreliert. Weiterhin sind in einer Ausgestaltung die oben genannten Ausführungen zum zumindest einen Schraubloch analog auf die Öffnung anwendbar.

In einer weiteren Ausgestaltung ist vorgesehen, dass das Formbauteil zumindest ein Positioniermittel umfasst. Das Positioniermittel ist in einer Ausgestaltung eine Erhebung aus dem Grundblech. In einer weiteren Ausgestaltung ragt das Positioniermittel aus dem Grundblech heraus. Besonders bevorzugt ist vorgesehen, dass das Positioniermittel etwa 5 % bis etwa 150 %, bevorzugt etwa 20 % bis etwa 120 %, weiter bevorzugt etwa 80 % bis etwa 100 % der Materialstärke des Grundblechs senkrecht zur Grundblechebene über dem Grundblech hervorsteht. In einer weiteren Ausgestaltung ist vorgesehen, dass das Positioniermittel ein aus dem Grundblech herausgelöstes, insbesondere ausgestanztes, Teil ist. In einer Ausführungsform ist das Positioniermittel mit dem Grundblech verbunden, bevorzugt materialverbunden. In einer bevorzugten Ausgestaltung ist das Positioniermittel mit dem Grundblech einstückig verbunden. Insbesondere ist das Positioniermittel aus dem Grundblech herausgelöst und zweimal umgebogen (Doppelbiegung), wobei eine im Wesentlichen ebene Oberfläche im Wesentlichen parallel zur Grundblechebene angeordnet ist. In einer weiteren Ausgestaltung ist vorgesehen, dass die im Wesentlichen ebene Oberfläche an die zweifache Abkantung angrenzt. In einer weiteren Ausführung ist das zumindest eine Positioniermittel aus dem Grundblech herausgelöst und über eine Einfachbiegung mit dem Grundblech verbunden.

In einer weiteren Ausgestaltung ist vorgesehen, dass die Positioniermittel eine Erstreckung aufweisen, die parallel zur Grundblechebene ausgeführt ist. Vorzugsweise weist das Positioniermittel eine im Wesentlichen parallele Erstreckung zur Grundblechebene, insbesondere bei einer Doppelbiegung, vom Grundblech auf. In einer weiteren Ausführungsform weist das Positioniermittel eine im Wesentlichen abgewinkelte Erstreckung zur Grundblechebene, insbesondere bei einer Einfachbiegung, vom Grundblech auf.

In einer Ausführungsform ist vorgesehen, dass das Positioniermittel eine Oberfläche aufweist, die sich in Richtung der Flächenerstreckung erstreckt, wobei insbesondere die Oberfläche des Positioniermittels bevorzugt parallel zu einer Oberfläche des Grundblechs ist. In einer Ausführungsform ist vorgesehen, dass das Grundblech eine Materialstärke d aufweist, die insbesondere im Wesentlichen identisch mit der Materialstärke p des Positioniermittels ist. Weiterhin weist die Torsionslasche in einer Ausführungsform eine Materialstärke t auf, die im Wesentlichen identisch ist zur Materialstärke d des Grundblechs ist.

In einer bevorzugten Ausführungsform ist vorgesehen, dass zumindest zwei, bevorzugt vier Positioniermittel vorgesehen sind. In einer Ausgestaltung ist vorgesehen, dass die zumindest zwei Positioniermittel spiegelsymmetrisch zueinander angeordnet sind. Vorzugsweise sind die zumindest zwei Positioniermittel derart zueinander angeordnet, dass die abgekanteten Seiten, beziehungsweise die Seiten, die mit dem Grundblech materialverbunden sind, zueinander weisen. In einer weiteren Ausführungsform ist vorgesehen, dass die zumindest zwei Positioniermittel derart zueinander angeordnet sind, dass die den abgekanteten Seiten gegenüberliegenden Seiten zueinander weisen.

In einer Variante des Formbauteils liegen die Torsionslaschen sowie die Positioniermittel in der Grundblechebene. Insbesondere sind die Torsionslaschen, die Positioniermittel, die Schraublöcher und/oder eine Materialschwächung vorzugsweise in einem Arbeitsschritt aus dem Grundblech herausgelöst und insbesondere ausgestanzt. Eine Umbiegung beziehungsweise Abkantung der Torsionslaschen und der Positioniermittel ist bevorzugt nicht erfolgt. Eine solche Ausführungsform reduziert insbesondere die Lagerhaltungskosten und die Versandkosten, da ein derart ausgestaltetes Formteil wesentlich weniger Lagerraum benötigt. Die Positioniermittel und/oder die Torsionslaschen können vorteilhaft je nach Bedarf am Ort des Einsatzes herausgebogen und montiert werden.

In einer weiteren Ausführungsform ist vorgesehen, dass das Grundblech zwischen zumindest zwei Torsionslaschen eine Materialschwächung umfasst. Vorzugsweise ist die Materialschwächung linienförmig, weiter bevorzugt gerade, ausgeführt. Die Materialschwächung weist in einer Ausgestaltung eine Anzahl von Ausnehmungen in dem Grundblech auf, die weiter bevorzugt in einer geraden Linie angeordnet sind. In einer weiteren Ausführungsform ist die Materialschwächung ein einfach oder mehrfach rollierter und/oder geprägter Bereich. Insbesondere ist die Materialschwächung auf einer Symmetrieachse des Grundbleches angeordnet. Mittels der Materialschwächung ist ein Umbiegen des Grundblechs beispielsweise, mittels eines Handwerkzeugs, beziehungsweise ein Abkanten, beispielsweise mittels eines Handwerkzeugs, vereinfacht. Ist beispielsweise das Formteil als Verbinder ausgestaltet, fungiert dieses insbesondere als Eckverbinder, indem das Grundblech bevorzugt entlang der Materialschwächung abgekantet ist. Die Materialschwächung ist in einer weiteren Ausgestaltung ausgestaltet als eine insbesondere sich über das ganze Grundblech erstreckende Sicke. In einer weiteren Ausgestaltung ist vorgesehen, dass die Materialschwächung als eine Aneinanderreihung von zumindest zwei, in einer weiteren Ausgestaltung zumindest drei, weiter bevorzugt zumindest vier vorzugsweise vollständig durchgängigen Ausnehmungen vorgesehen ist. In einer Ausführungsform sind die Ausnehmungen rechteckig, in einer weiteren Ausgestaltung rund, ausgestaltet. In einer weiteren Ausgestaltung ist vorgesehen, dass die Materialschwächung zumindest eine, weiter bevorzugt zwei, weiter bevorzugt drei, weiter bevorzugt mindestens vier, Ausnehmungen aufweist, die nicht durchgängig ausgestaltet sind. In einer weiteren Ausführungsform ist vorgesehen, dass die Materialschwächung eine insbesondere von einer ersten Kante des Grundblechs zu einer gegenüberliegenden Kante des Grundblechs sich erstreckende Ausnehmung umfasst, die nicht durchgängig ist. Vorzugsweise umfasst die Materialschwächung eine Kerbe. In einer weiteren Ausgestaltung ist vorgesehen, dass die Ausnehmung in Richtung der Materialstärke des Grundblechs einen sich verengenden Querschnitt aufweist. Insbesondere ist die Ausnehmung im Querschnitt keilförmig. In einer weiteren Ausgestaltung ist vorgesehen, dass die Materialschwächung eine Deformationslinie bildet. Entlang der Deformationslinie kann eine Abkantung mit einem geringeren Moment ausgeführt werden als eine Abkantung an einer Linie über das Grundblech, die keine Materialschwächung aufweist. Vorzugsweise kann an der Deformationslinie eine Deformation beziehungsweise Abkantung des Grundblechs vorgenommen werden, beispielsweise mittels zweier Zangen, mit denen auf gegenüberliegende Seiten der Materialschwächung ein Moment aufgebracht wird, dass das Grundblech verbiegt.

In einer beispielhaften Ausführungsform ist das Formteil als Verbindungselement ausgestaltet und weist ein Grundblech auf. Das Grundblech umfasst in einer Ausführungsform eine Oberfläche, die in einer Grundblechebene angeordnet ist. Aus dieser heraus erstrecken sich in einer Ausgestaltung zwei, bevorzugt vier, weiter bevorzugt sechs Torsionslaschen. Den Torsionslaschen sind in einer Ausführungsform jeweils Positioniermittel und Schraublöcher zugeordnet. Insbesondere sind jeder Torsionslasche jeweils ein Positioniermittel und ein Schraubloch zugeordnet. In einer weiteren Ausführungsform ist vorgesehen, dass nur einem, bevorzugt nur zwei, weiter bevorzugt nur drei Torsionslaschen einem Positioniermittel zugeordnet sind. In einer weiteren Ausgestaltung ist vorgesehen, dass nur jede zweite, bevorzugt jede dritte Torsionslasche einem Positioniermittel zugeordnet ist. In einer weiteren Ausführungsform ist vorgesehen, dass ein oder mehrere Positioniermittel unabhängig von einer oder mehreren Torsionslaschen auf dem Grundblech angeordnet sind. Die Torsionslaschen erstrecken sich in einer beispielhaften Ausführungsform im Wesentlichen senkrecht zur Grundblechebene in die gleiche Richtung von der Grundblechoberfläche weg. Die Positioniermittel sind insbesondere aus der Grundblechebene hervorgehoben. Sowohl die Torsionslaschen als auch die Positioniermittel sind in einer Ausgestaltung aus dem Material des Grundblechs herausgelöst, insbesondere herausgestanzt. Durch Biegen der Torsionslaschen aus der Grundblechebene heraus sind insbesondere in einer Ausgestaltung Öffnungen entstanden, die den Torsionslaschen zugeordnet sind. Beispielsweise ist vorgesehen, dass das Grundblech eine Anzahl von rechteckigen durchgängigen Materialschwächungen aufweist, die in einer Linie, insbesondere einer geraden Linie, angeordnet sind. Die Materialschwächungen trennen in einer Ausführungsform ein, zwei, drei oder mehr als drei Torsionslaschen oder Torsionslaschenpaare. Insbesondere sind die Materialschwächungen derart ausgestaltet, dass ein leichtes Biegen entlang der durch die Materialschwächungen erzeugten Deformationslinie, beispielsweise mit einem Handwerkzeug, einfach möglich ist. In einer beispielhaften Ausführungsform ist vorgesehen, dass das Grundblech jeweils vier Torsionslaschen aufweist, denen jeweils ein Schraubloch und ein Positioniermittel und/oder die Öffnung zugeordnet ist. In einer Ausgestaltung sind die Torsionslaschen, die Positioniermittel und/oder die Schraublöcher einer Ecke des Grundbleches zugeordnet.

Die Torsionslaschen sind in einer Ausführungsform derart auf dem Grundblech angeordnet, dass jeweils zwei Torsionslaschen spiegelsymmetrisch zueinander angeordnet sind, wobei insbesondere die Deformationslinie, die durch die Materialschwächung gebildet ist, die Symmetrieachse bildet. Insbesondere ist in einer Ausführungsform vorgesehen, dass die Öffnungen, aus denen die Torsionslaschen herausgebogen sind, relativ zu den Torsionslaschen jeweils in die gleiche Richtung angeordnet sind. Des Weiteren sind in einer Ausgestaltung die Positioniermittel jeweils den Öffnungen zugeordnet. Beispielsweise ist die Ausgestaltung der Positioniermittel derart, dass jeweils zwei Positioniermittel entlang einer Symmetrieachse gespiegelt auf dem Grundblech angeordnet sind. Insbesondere weisen die Positioniermittel auf jeweils einer Seite der Deformationslinie zueinander gerichtete Kantungen auf. Die Kantungen sind vorzugsweise die Abschnitte der Positioniermittel, die derart umgebogen sind, dass die Positioniermittel aus der Grundebene über das Grundblech herausragen. Insbesondere ist die Kantung der Abschnitt des Positioniermittels, der mit dem Grundblechmaterial verbunden ist.

In einer beispielhaften Ausführungsform umfasst das Formbauteil vier Torsionslaschen, die aus einer Grundblechebene heraus ragen. Die vier Torsionslaschen sind bevorzugt den Ecken des Grundbleches zugeordnet. In einer weiteren Ausführungsform sind jeweils zwei Torsionslaschen etwa zwischen einer Symmetrieachse des Grundbleches und einer Außenkante des Grundbleches mittig angeordnet.

In einer weiteren beispielhaften Ausführungsform weist das Formbauteil vier Torsionslaschen und eine Materialschwächung auf, die bevorzugt eine Anzahl von Ausnehmungen in dem Grundblech aufweist, die weiter bevorzugt in einer geraden Linie insbesondere auf einer Symmetrieachse des Grundbleches angeordnet sind.

In einer weiteren beispielhaften Ausgestaltung ist vorgesehen, dass das Formbauteil vier Trosionslaschen und vier Positioniermittel aufweist. Insbesondere sind die vier Positioniermittel jeweils den vier Torsionslaschen zugeordnet. Weiterhin ist in einer Ausgestaltung vorgesehen, dass jeweils zwei Positioniermittel jeweils einer Außenkante zugeordnet sind. In einer Ausführungsform ist insbesondere zusätzlich vorgesehen, dass zumindest zwei Positioniermittel einer Ecke des Grundbleches zugeordnet sind. Beispielweise sind vier Torsionslaschen, vier Positioniermittel und eine Materialschwächung vorgesehen.

In einer weiteren beispielhaften Ausgestaltung ist vorgesehen, dass das Formbauteil vier Trosionslaschen und vier Schraublöcher aufweist. Insbesondere sind die vier Schraublöcher jeweils den vier Torsionslaschen zugeordnet. Weiterhin ist in einer Ausgestaltung vorgesehen, dass jeweils zwei Schraublöcher jeweils einer Außenkante zugeordnet sind. In einer Ausführungsform ist insbesondere zusätzlich vorgesehen, dass zumindest zwei Schraublöcher einer Ecke des Grundbleches zugeordnet sind. Beispielweise sind vier Torsionslaschen, vier Schraublöcher und eine Materialschwächung vorgesehen.

In einer weiteren beispielhaften Ausgestaltung ist vorgesehen, dass das Formbauteil vier Trosionslaschen und vier Schraublöcher und vier Positioniermittel aufweist. Insbesondere sind die vier Schraublöcher und die vier Positioniermittel jeweils den vier Torsionslaschen zugeordnet. Weiterhin ist in einer Ausgestaltung vorgesehen, dass jeweils zwei Schraublöcher und zwei Positioniermittel jeweils einer Außenkante zugeordnet sind. In einer Ausführungsform ist insbesondere zusätzlich vorgesehen, dass zwei Schraublöcher und zwei Positioniermittel jeweils einer Ecke des Grundbleches zugeordnet sind. Beispielweise sind vier Torsionslaschen, vier Positioniermittel, vier Schraublöcher und eine Materialschwächung vorgesehen.

Weiterhin wird eine beispielhafte Ausgestaltung, nachstehend alternatives Formteil genannt, vorgeschlagen, wobei das Grundblech zumindest eine Werkzeugöffnung zur Verdrehung einer Torsionslasche eines zweiten Formbauteils aufweist. Vorzugsweise ist die zumindest eine Werkzeugöffnung einem Rand des Grundbleches zugeordnet. In einer weiteren Ausführungsform ist vorgesehen, dass zumindest einer Ecke des Grundbleches zumindest eine Werkzeugöffnung zugeordnet ist. In einer weiteren Ausführungsform ist vorgesehen, dass einer Materialschwächung, insbesondere in Form einer Deformationslinie, insbesondere gebildet mit einer oder mehreren Ausnehmungen, zumindest eine Werkzeugöffnung zugeordnet ist, weiter bevorzugt einer Oberkante oder Unterkante des Grundblechs zugeordnet beziehungsweise nahe. In einer weiteren Ausgestaltung ist vorgesehen, dass zumindest zwei, bevorzugt zumindest drei, weiter bevorzugt zumindest vier Werkzeugöffnungen im Grundblech angeordnet sind. In einer Ausgestaltung ist vorgesehen, dass allen Ecken des Grundbleches eine Werkzeugöffnung zugeordnet ist.

Bevorzugt ist die zumindest eine Werkzeugöffnung rechteckig ausgestaltet, insbesondere derart, dass eine Torsionslasche eines zweiten, bevorzugt gleich ausgestalteten Formbauteils, durch die Werkzeugöffnung durchsteckbar ist. Bevorzugt ist in einer Ausführung vorgesehen, dass eine Längserstreckung der Werkzeugöffnung in einem Winkel von etwa 30° bis etwa 120°, bevorzugt etwa 30° bis etwa 60°, weiter bevorzugt etwa 45°, zu einer Außenkante des Grundbleches oder einer Materialschwächung, als Deformationslinie ausgebildet, angeordnet ist.

Erfindungsgemäß umfasst das alternative Formbauteil zumindest zwei, bevorzugt zumindest vier Torsionslaschen. Bevorzugt sind die Torsionslaschen des alternativen Formbauteils mit dem Grundblech einstückig verbunden. In einer Ausführungsform ist vorgesehen, dass die Mittellängsachse der Torsionslasche des alternativen Formbauteils zu einer Grundblechebene einen Winkel von etwa 80° bis etwa 100° aufweist. Ausgestaltungen und Positionierung der zumindest einen Torsionslasche sind in einer Ausführungsform entsprechend des oben beschriebenen Formbauteils ausgeführt.

In einer weiteren Ausführungsform des alternativen Formbauteils ist vorgesehen, dass dieses zumindest ein Schraubloch aufweist. Bevorzugt ist das zumindest eine Schraubloch einer Torsionslasche zugeordnet. In einer weiteren Ausgestaltung des alternativen Formbauteils ist vorgesehen, dass der Abstand eines Mittelpunktes des zumindest einen Schraubloches zur insbesondere untordierten Torsionslasche etwa eine halbe Sechskant-Schlüsselweite beträgt, die mit einem Nenndurchmesser des Schraubloches korreliert. Ausgestaltungen und Positionierung des zumindest einen Schraubloches sind in einer Ausführungsform entsprechend des oben beschriebenen Formbauteils ausgeführt.

In einer Ausgestaltung umfasst das alternative Formbauteil zumindest ein Positioniermittel. Insbesondere ist in einer Ausführungsform vorgesehen, dass das Positioniermittel aus dem Grundblech ragt. Ausgestaltungen und Positionierung des zumindest einen Positioniermittels sind in einer Ausführungsform entsprechend des oben beschriebenen Formbauteils ausgeführt.

In einer weiteren Ausgestaltung des alternativen Formbauteils ist vorgesehen, dass das Grundblech zwischen zumindest zwei Torsionslaschen mindestens eine Materialschwächung umfasst. Bevorzugt umfasst die Materialschwächung eine Anzahl von Ausnehmungen in dem Grundblech. Ausgestaltungen und Positionierung der Materialschwächung sind in einer Ausführungsform entsprechend des oben beschriebenen Formbauteils ausgeführt.

Insbesondere kann das alternative Formbauteil sowohl zur Verbindung zumindest zweier Kabelführungsbauteile als auch als Werkzeug verwendet werden.

In einer beispielhaften Ausführungsform sind zumindest zwei Kabelführungsbauteile, insbesondere Kabelführungsbauteile, beispielsweise auf Stoß miteinander mittels zumindest eines ersten Formbauteils verbunden. Beispielsweise sind Torsionslaschen, insbesondere jeweils zwei Torsionslaschen, des Formbauteils durch Ausnehmungen, insbesondere jeweils zwei Ausnehmungen, der miteinander verbundenen Kabelführungsbauteile gesteckt. In einer Ausgestaltung ist ein alternatives Formbauteil insbesondere um etwa 90°, bevorzugt entlang der Materialschwächung abkantbar, vorzugsweise derart, dass es als Werkzeug benutzbar ist. Mittels der Werkzeugöffnung des alternativen Formbauteils ist eine beispielsweise in der Ausnehmung des Kabelführungsbauteils angeordnete Torsionslasche eines weiteren Formbauteils greifbar. Weiterhin ist in einer Ausgestaltung vorgesehen, dass mittels des alternativen Formbauteils eine beispielsweise in der Ausnehmung angeordnete Torsionslasche eines weiteren Formbauteils tordierbar ist, insbesondere durch drehen des alternativen, als Werkzeug dienenden, Formbauteils.

In einer Ausgestaltung ist vorgesehen, dass eine Drehung des alternativen, als Werkzeug dienenden, Formbauteils um einen Winkel von etwa 30° bis etwa 50°, bevorzugt etwa 45°, eine ausreichende Torsion der Torsionslasche verursacht, um insbesondere das Formbauteil mit dem Kabelführungsbauteil formschlüssig zu verbinden und vorzugsweise zu verspannen. Insbesondere ist die Werkzeugöffnung derart in dem Grundblech eingebracht, dass eine Drehung des alternativen Formbauteils in eine waagerechte Position eine ausreichende Torsion der Torsionslasche verursacht, um das Formbauteil mit dem Kabelführungsbauteil zu verspannen. Insbesondere ist eine waagerechte Position eine Stellung des alternativen, als Werkzeug dienenden, Formbauteils, bei der zumindest eine Kante des Kabelführungsbauteils, beispielsweise eines Kabelführungsbauteils, ist. Waagerecht bedeutet im Wesentlichen parallel zu einer Hauptachse des Kabelführungsbauteils. In einer beispielhaften Ausführungsform umfasst Kante des Grundbleches etwa parallel zu einer das alternative Formbauteil vier Werkzeugöffnungen. Die vier Werkzeugöffnungen bevorzugt sind den Ecken des Grundbleches zugeordnet. In einer weiteren Ausführungsform sind jeweils zwei Werkzeugöffnungen auf einer Seite einer Symmetrieachse des Grundbleches zugeordnet.

In einer weitern beispielhaften Ausführungsform weist das alternative Formbauteil vier Werkzeugöffnungen und eine Materialschwächung auf, die bevorzugt eine Anzahl von Ausnehmungen in dem Grundblech aufweist, die weiter bevorzugt in einer geraden Linie insbesondere auf einer Symmetrieachse des Grundbleches angeordnet sind. In einer weiteren Ausführungsform sind jeweils zwei Werkzeugöffnungen auf einer Seite der Materialschwächung zugeordnet.

In einer beispielhaften Ausführungsform umfasst das alternative Formbauteil vier Torsionslaschen, die aus einer Grundblechebene heraus ragen. Die vier Torsionslaschen sind den Ecken des Grundbleches zugeordnet. In einer weiteren Ausführungsform sind jeweils zwei Torsionslaschen etwa zwischen der Deformationslinie und einer Außenkante des Grundbleches mittig angeordnet. Beispielweise sind vier Werkzeugöffnungen, vier Torsionslaschen und eine Materialschwächung vorgesehen.

In einer weiteren beispielhaften Ausgestaltung ist vorgesehen, dass das alternative Formbauteil vier Trosionslaschen und vier Positioniermittel aufweist. Insbesondere sind die vier Positioniermittel jeweils den vier Torsionslaschen zugeordnet. Weiterhin ist in einer Ausgestaltung vorgesehen, dass jeweils zwei Positioniermittel jeweils einer Außenkante zugeordnet sind. In einer Ausführungsform ist insbesondere zusätzlich vorgesehen, dass zumindest zwei Positioniermittel einer Ecke des Grundbleches zugeordnet sind. Beispielweise sind vier Werkzeugöffnungen, vier Torsionslaschen vier Positioniermittel und eine Materialschwächung vorgesehen.

In einer weiteren beispielhaften Ausgestaltung ist vorgesehen, dass das alternative Formbauteil vier Trosionslaschen und vier Schraublöcher aufweist. Insbesondere sind die vier Schraublöcher jeweils den vier Torsionslaschen zugeordnet. Weiterhin ist in einer Ausgestaltung vorgesehen, dass jeweils zwei Schraublöcher jeweils einer Außenkante zugeordnet sind. In einer Ausführungsform ist insbesondere zusätzlich vorgesehen, dass zumindest zwei Schraublöcher einer Ecke des Grundbleches zugeordnet sind. Beispielweise sind vier Werkzeugöffnungen, vier Torsionslaschen, vier Schraublöcher und eine Materialschwächung vorgesehen.

In einer weiteren beispielhaften Ausgestaltung ist vorgesehen, dass das alternative Formbauteil vier Trosionslaschen und vier Schraublöcher und vier Positioniermittel aufweist. Insbesondere sind die vier Schraublöcher und die vier Positioniermittel jeweils den vier Torsionslaschen zugeordnet. Weiterhin ist in einer Ausgestaltung vorgesehen, dass jeweils zwei Schraublöcher und zwei Positioniermittel jeweils einer Außenkante zugeordnet sind. In einer Ausführungsform ist insbesondere zusätzlich vorgesehen, dass zwei Schraublöcher und zwei Positioniermittel jeweils einer Ecke des Grundbleches zugeordnet sind. Beispielweise sind vier Werkzeugöffnungen, vier Torsionslaschen, vier Positioniermittel, vier Schraublöcher und eine Materialschwächung vorgesehen.

Weiterhin wird ein Verfahren zur Verbindung zumindest zweier Kabelführungsbauteile mit einem als Verbindungselement ausgestalteten Formbauteil wie oben beschrieben vorgeschlagen. Zumindest eine erste Torsionslasche des Formbauteils wird durch eine erste Ausnehmung eines Kabelführungsbauteils geführt, wobei die erste Torsionslasche um etwa 10° bis etwa 170° um eine Mittellängsachse der Torsionslasche tordiert wird. Ein Laschenkopf der ersten Torsionslasche, insbesondere ein Spannbereich des Laschenkopfes, wirkt derart mit dem ersten Kabelführungsbauteil zusammen, dass der Laschenkopf, insbesondere dessen Spannbereich, das erste Kabelführungsbauteil mit dem Grundblech des Formbauteils verspannt und zumindest eine zweite Torsionslasche des Formbauteils durch eine zweite Ausnehmung eines zweiten Kabelführungsbauteils geführt wird, wobei die zweite Torsionslasche um etwa 10° bis etwa 170° um ihre Mittellängsachse tordiert wird, wobei der Laschenkopf der zweiten Torsionslasche derart mit dem zweiten Kabelführungsbauteil zusammenwirkt, dass der Laschenkopf das zweite Kabelführungsbauteil mit dem Grundblech des Formbauteils verspannt. In einer weiteren Ausgestaltung ist vorgesehen, dass vor dem Verbinden des Formbauteils mit dem Kabelführungsbauteil die Ausnehmung in das erste Kabelführungsbauteil eingebracht wird. Vorzugsweise wird die Ausnehmung in das Kabelführungsbauteil eingebracht, die es erlaubt, die Torsionslasche durch die Ausnehmung zu führen, wobei ein Herausziehen nach der Tordierung des Laschenkopfes um etwa 10° bis etwa 170° um eine Mittellängsachse der Torsionslasche nicht möglich ist.

Vorzugsweise wird die Torsionslasche um etwa 30° bis etwa 120°, weiter bevorzugt etwa 40° bis etwa 100°, weiter bevorzugt etwa 45° tordiert. In einer Ausführungsform wird die Torsionslasche derart tordiert, dass ein Spannbereich mit dem Kabelführungsbauteil zusammenwirkt. In einer weiteren Ausgestaltung ist vorgesehen, dass der Spannbereich während und/oder nach der Torsion beziehungsweise Verdrehung des Laschenkopfes eine Kraft auf das Kabelführungsbauteil aufbringt. In einer weiteren Ausgestaltung ist vorgesehen, dass die Kraft einer Federkraft entspricht, die proportional zur Federkonstante ist, die der Torsionsbereich insbesondere nach der Tordierung aufweist.

Erfindungsgemäß ist vorgesehen, dass zumindest eine zweite Torsionslasche des Formbauteils durch eine zweite Ausnehmung eines zweiten Kabelführungsbauteils geführt wird, wobei die zweite Torsionslasche um etwa 10° bis etwa 170° um die Mittellängsachse der Torsionslasche tordiert wird, wobei der Laschenkopf der zweiten Torsionslasche derart mit dem ersten Kabelführungsbauteil zusammenwirkt, dass der Laschenkopf das zweite Kabelführungsbauteil mit dem Grundblech des Formbauteils verspannt. Mittels des Formteils sind zwei Kabelführungsbauteile miteinander verbindbar. In einer weiteren Ausgestaltung sind derart mittels des Formbauteils zwei Kabelführungsbauteile auf Stoß verbindbar. In einer weiteren Ausgestaltung ist vorgesehen, dass bei Vorsehung von mindestens zwei Torsionslaschen die Torsionslaschen auf entgegengesetzten Seiten der Grundblech aus der Grundblechebene herausragen, so dass zwei Kabelführungsbauteile parallel zueinander verbindbar sind, wobei das Formbauteil zwischen den Kabelführungsbauteilen angeordnet ist. In einer weiteren Ausführungsform ist vorgesehen, dass mittels des Formbauteils zwei Kabelführungsbauteile miteinander verbindbar sind, in dem zumindest eine Torsionslasche durch eine Ausnehmung eines ersten Kabelführungsbauteils und gleichzeitig eines Ausnehmung eines zweiten Kabelführungsbauteiles geführt wird und dann um die Mittellängsachse tordiert wird. Auf diese Weise lassen sich beispielsweise überlappende Verbindungen von Kabelführungsbauteilen mittels des Formbauteils verwirklichen.

In einer weiteren Ausgestaltung ist vorgesehen, dass ein Positioniermittel des Formbauteils in zumindest eine Positionieröffnung eines Kabelführungsbauteils eingefügt wird. Vorzugsweise ist die Positionieröffnung des Kabelführungsbauteils etwa so groß wie die Dimensionierung des Positioniermittels.

In einer weiteren Ausgestaltung ist vorgesehen, dass das Formbauteil insbesondere vor dem Verbinden der Kabelführungsbauteile entlang einer Materialschwächung umgebogen wird. In einer weiteren Ausführungsform ist vorgesehen, dass das Formbauteil nach dem Verbinden der Kabelführungsbauteile entlang einer Materialschwächung umgebogen wird. Bevorzugt wird zum Umbiegen zumindest ein Kabelführungsbauteil als Hebel benutzt, um das Formbauteil entlang der Materialschwächung umzubiegen.

Insbesondere kann das Formbauteil zusätzlich mittels einer Schraube mit den Kabelführungsbauteilen verbunden werden. Hierzu wird eine Schraube durch das Schraubloch und das Kabelführungsbauteil gesteckt oder geschraubt und insbesondere mittels einer Mutter fixiert. In einer weiteren Ausführungsform ist vorgesehen, dass eine Sechskantschraube und/oder eine Mutter, die einem Schraubloch des Formbauteils zugeordnet ist, mittels der insbesondere untordierten Torsionslasche drehsicher gehalten wird. Vorteilhafterweise wird die Schraubverbindung derart durch das Schraubloch geführt, dass die Mutter oder der Kopf der Sechskantschraube mit einer Flanke des Kopfes beziehungsweise einer Flanke der Mutter an der Torsionslasche im Wesentlichen anliegt oder zumindest teilweise anliegt. Insbesondere ist in einer Ausgestaltung vorgesehen, dass ein Spiel zwischen Torsionslasche und einer Flanke des Außensechskantkopfes beziehungsweise der Mutter vorgesehen ist, dass weiterhin bevorzugt derart ausgestaltet ist, dass sich die Schraube beziehungsweise die Mutter nicht mehr als etwa 0,5° bist etwa 10°, bevorzugt etwa 1° bis etwa 5°, drehen kann.

Beispielweise kann mittels des Schraubloches, insbesondere mittels einer Schraubverbindung, die dem Schraubloch zugeordnet ist, das Formbauteil mit einem Kabelführungsbauteil verbunden werden, welches keine Ausnehmung für die Torsionslasche aufweist. Weiterhin vorteilhaft kann mittels des Schraubloches, insbesondere mittels einer Schraubverbindung, die dem Schraubloch zugeordnet ist, das Formbauteil mit einem Kabelführungsbauteil verbunden werden, welches keine Ausnehmung für Positioniermittel aufweist. Beispielweise wird ein Loch in das Kabelführungsbauteil gebohrt, das mit dem Schraubloch des Formbauteils in eine Flucht bringbar ist. Diese Ausgestaltung ist vorteilhaft für die Verwendung des Formbauteils mit nicht für das Formbauteil angepasste Kabelführungsbauteilen oder beispielsweise gekürzten Kabelführungsbauteilen, die keine oder unpassende Ausnehmungen für Torsionslaschen aufweisen.

Weiterhin wird ein System einer Blechkonstruktion vorgeschlagen, zumindest umfassend ein erstes Kabelführungsbauteil, ein zweites Kabelführungsbauteil und zumindest eine als Verbindungselement ausgestaltetes Formbauteil wie oben beschrieben. Zumindest eine Torsionslasche des Formbauteils ragt zumindest durch zumindest eine erste Ausnehmung eines ersten Kabelführungsbauteils und ist derart um etwa 10° bis etwa 170°, bevorzugt etwa 30° bis etwa 120°, weiter bevorzugt etwa 40° bis etwa 100°, weiter bevorzugt etwa 45°, tordiert ist, dass ein Laschenkopf, insbesondere ein Spannbereich eines Laschenkopfes, der ersten Torsionslasche derart mit dem ersten Kabelführungsbauteil zusammenwirkt, dass ein Grundblech des Formbauteils mit dem ersten Kabelführungsbauteil verspannt ist, wobei zumindest eine zweite Torsionslasche des Formbauteils durch zumindest eine zweite Ausnehmung des zweiten Kabelführungsbauteils ragt und derart um etwa 10° bis etwa 170° tordiert ist, dass ein Laschenkopf der zweiten Torsionslasche derart mit dem zweiten Kabelführungsbauteil zusammenwirkt, dass ein Grundblech des Formbauteils mit dem zweiten Kabelführungsbauteil verspannt ist.

In einer weiteren Ausgestaltung ist vorgesehen, dass das System ein zweites Kabelführungsbauteil aufweist, wobei zumindest eine zweite Torsionslasche des Formbauteils durch zumindest eine zweite Ausnehmung eines zweiten Kabelführungsbauteils ragt und derart um etwa 10° bis etwa 170°, bevorzugt etwa 30° bis etwa 120°, weiter bevorzugt etwa 40° bis etwa 100°, weiter bevorzugt etwa 45°, tordiert ist, dass ein Laschenkopf, insbesondere ein Spannbereich eines Laschenkopfes, der zweiten Torsionslasche derart mit dem zweiten Kabelführungsbauteil zusammenwirkt, dass ein Grundblech des Formbauteils mit dem zweiten Kabelführungsbauteil verspannt ist.

In einer weiteren Ausgestaltung ist vorgesehen, dass die Ausnehmung des ersten und/oder des zweiten Kabelführungsbauteils eine erste Erstreckung aufweist, die größer ist als eine Erstreckung des Laschenkopfes senkrecht zu einer Mittellängsachse der Torsionslasche und senkrecht zu der Materialstärke der Torsionslasche. Die Ausnehmung weist weiterhin eine zweite Erstreckung auf, die größer als eine Materialstärke der Torsionslasche und kleiner als eine Erstreckung des Laschenkopfes senkrecht zu einer Mittellängsachse der Torsionslasche und senkrecht zur Richtung der Materialstärke der Torsionslasche ist, wobei insbesondere die erste Erstreckung im Wesentlichen senkrecht zur zweiten Erstreckung ist. Auf diese Weise kann die Torsionslasche durch die Ausnehmung hindurch gesteckt werden und sitzt nach der Torsion der Torsionslasche um die Mittellängsachse formschlüssig in der Ausnehmung, insbesondere formschlüssig in Richtung der Mittellängsachse.

In einer weiteren Ausführungsform ist vorgesehen, dass eine Materialstärke eines Kabelführungsbauteils etwa so groß ist wie eine Länge eines Torsionsbereiches in Richtung einer Mittellängsachse der Torsionslasche. In einer weiteren Ausführungsform ist vorgesehen, dass eine Materialstärke eines Kabelführungsbauteils größer ist als eine Länge eines Torsionsbereichs in Richtung einer Mittellängsachse der Torsionslasche. Vorzugsweise ist der Torsionsbereich, weiter bevorzugt der Torsionsbereich in Verbindung mit dem Spannbereich des Laschenkopfes, derart ausgelegt, dass durch Verdrehen des Laschenkopfes beziehungsweise Tordieren der Torsionslasche der Spannbereich des Laschenkopfes auf das Kabelführungsbauteil wirkt. Hierzu ist insbesondere vorgesehen, dass der Torsionsbereich kürzer in Richtung der Längsachse des Laschenkopfes ist als eine Materialstärke des Kabelführungsbauteils. In einer weiteren Ausgestaltung ist der Torsionsbereich in Richtung der Längsachse des Laschenkopfes mindestens 20 % kürzer, bevorzugt mindestens 50 % kürzer, weiter bevorzugt mindestens 75 % kürzer als die Materialstärke des Kabelführungsbauteils. In einer weiteren Ausgestaltung ist vorgesehen, dass der Torsionsbereich eine Länge in Richtung der Mittellängsachse aufweist von bis zu etwa einem Viertel der Materialstärke des Kabelführungsbauteils, bevorzugt bis etwa dem 1,5-fachen der Materialstärke des Kabelführungsbauteils, weiter bevorzugt bis etwa einer Materialstärke des Kabelführungsbauteils, weiter bevorzugt bis etwa drei Viertel der Materialstärke des Kabelführungsbauteils, und noch weiter bevorzugt bis etwa einer halben Materialstärke des Kabelführungsbauteils. Der Spannbereich ist insbesondere derart ausgestaltet, dass dieser auf die Öffnungsweite der Ausnehmung des Kabelführungsbauteils im Wesentlichen angepasst ist. So ist beispielsweise in einer Ausgestaltung vorgesehen, dass der Torsionsbereich insbesondere in Verbindung mit dem Spannbereich eine Länge von etwa 50 % bis etwa 95 %, bevorzugt etwa 75% bis etwa 80 %, der Materialstärke des Kabelführungsbauteils aufweist, und der Spannbereich sich derart erstreckt, dass dieser bei einer Rotation von etwa45° derart auf das Kabelführungsbauteil wirkt, dass eine Kraft von etwa 0,1 N bis etwa 5 N, weiter bevorzugt etwa 0,1 N bis etwa 2 N ,von dem Spannbereich auf das Kabelführungsbauteil übertragen wird.

Vorteil der Verspannung des Formbleches mit dem Kabelführungsbauteil ist, dass eine sichere elektrisch leitende Verbindung gewährleistet ist. Weiterhin ist der Vorteil der Verspannung des Formbleches mit dem Kabelführungsbauteil, dass das zumindest eine Positioniermittel in der zumindest einen Positionieröffnung des Kabelführungsbauteils sicher angeordnet ist, und insbesondere ein Herausrutschen des Positioniermittels aus der Positionieröffnung verhindert wird. Auf diese Weise wird ein definierter Formschluss des Formbauteils mit dem Kabelführungsbauteils gewährleistet. Der Formschluss des Formbauteils mit dem Kabelführungsbauteil ist insbesondere mittels des Positioniermittels definierter als ein Formschluss alleinig durch die Torsionslasche.

In einer weiteren Ausgestaltung ist vorgesehen, dass zumindest ein Kabelführungsbauteil das Formbauteil umfasst. Insbesondere ist das Formbauteil einstückig mit dem Kabelführungsbauteil verbunden. In einer weiteren Ausgestaltung ist vorgesehen, dass das Kabelführungsbauteil zumindest eine Torsionslasche umfasst. In einer weiteren Ausführungsform ist vorgesehen, dass das Formbauteil ein Kabelführungsbauteil ist, beispielsweise ein Kabelkanal.

Vorteilhaft ist, dass beispielsweise ein Kabelführungsbauteil das Formbauteil umfasst und mit einem weiteren Kabelführungsbauteil, dass eine entsprechende Ausnehmung zur Aufnahme der Torsionslasche aufweist, verbunden werden kann, da dann kein weiteres Bauteil zu verwenden ist. Beispielsweise sind die Kabelführungsbauteile, beispielsweise in Form von Kabelkanälen, überlappend, aneinander oder zumindest teilweise aufeinander angebracht.

In einer weiteren Ausgestaltung ist vorgesehen, dass zusätzlich zu dem Formbauteil das System ein Verbindungsteil aufweist, was ermöglicht, zwei Kabelführungsbauteile zu verbinden, die jeweils ein Formbauteil umfassen. Vorzugsweise umfasst das Verbindungsteil zumindest zwei Ausnehmungen zur formschlüssigen Aufnahme von Torsionslaschen. Weiter bevorzugt umfasst das Verbindungsteil ein plattenförmiges Bauteil, das bevorzugt die genannten Ausnehmungen aufweist. In einer Ausgestaltung ist vorgesehen, dass die Torsionslaschen zumindest zweier Formbauteile oder Kabelführungsbauteile, die zumindest ein Formbauteil aufweisen, durch Ausnehmungen des Verbindungsteils geführt und um etwa 10° bis etwa 170° tordiert sind. Auf diese Weise sind die beiden Kabelführungsbauteile mittels des Verbindungsteils miteinander verbunden. Vorteilhafterweise weist das Verbindungsteil in einer Ausführungsform nur die Ausnehmungen auf, die zur Aufnahme der Torsionslaschen notwendig sind. Vorteilhafterweise ist vorgesehen, dass die Kabelführungsbauteile auf diese Art auf Stoß miteinander verbunden werden können.

In einer weiteren Ausgestaltung ist vorgesehen, dass das Formbauteil zumindest ein Positioniermittel aufweist, dass zumindest eine Positionieröffnung zumindest eines Kabelführungsbauteils eingreift. Auf diese Weise wird eine sichere Positionierung insbesondere eine exakte Positionierung des Formbauteils zum Kabelführungsbauteil ermöglicht.

In einer weiteren Ausgestaltung ist vorgesehen, dass das Positioniermittel etwa 5 % bis etwa 150 %, bevorzugt etwa 20 % bis etwa 120 %, weiter bevorzugt etwa 80 % bis etwa 100 % der Materialstärke des Kabelführungsbauteils über das Grundblech, bevorzugt über eine Grundblechebene, des Formbauteils herausragt.

Ein beispielhaftes System einer Blechkonstruktion umfasst ein erstes Kabelführungsbauteil und ein zweites Kabelführungsbauteil sowie das Formbauteil. Das Formbauteil ist insbesondere derart an die Kabelführungsbauteile angeordnet, dass die insbesondere zwei, bevorzugt vier, Torsionslaschen jeweils durch eine Ausnehmung ragen. Zumindest eine erste Torsionslasche ragt beispielsweise durch die erste Ausnehmung des ersten Kabelführungsbauteils und zumindest eine zweite Torsionslasche ragt beispielsweise durch die zweite Ausnehmung des zweiten Kabelführungsbauteils. Die Kabelführungsbauteile sind vorzugsweise auf Stoß miteinander verbunden. Zur form- und kraftschlüssigen Verbindung des Formteils mit den Kabelführungsbauteilen und werden die Torsionslaschen um die jeweilige Längsachse tordiert. Die Spannbereiche der Torsionslaschen und der Spannbereiche wirken dabei insbesondere auf die Kabelführungsbauteile.

In einer weiteren Ausgestaltung ist vorgesehen, dass zumindest ein Kabelführungsbauteil ausgewählt aus einer Gruppe umfassend einen Kabelkanal, eine Kabelrinne, ein Gitterkanal, eine Kabelkanalabdeckung und/oder eine Kabelrinnenabdeckung ist.

Das Formbauteil ist insbesondere derart ausgebildet, dass dieses zwei Kabelführungsbauteile miteinander verbinden kann. In einer Ausführungsform ist vorgesehen, dass die Kabelführungsbauteile, vorzugsweise U-förmig, weiter bevorzugt rinnenförmig, ausgestaltet sind. Vorzugsweise weisen die Schenkel des Kabelführungsbauteils Ausnehmungen zur Aufnahme von Torsionslaschen des Formteils auf. In einer weiteren Ausführungsform weist ein Grund des Kabelführungsbauteils Ausnehmungen zur Aufnahme von Torsionslaschen des Formteils auf. In einer weiteren Ausgestaltung ist vorgesehen, dass vorzugsweise zumindest eine Wandung, weiter bevorzugt zumindest ein Schenkel und/oder der Grund des Kabelführungsbauteils zumindest eine Torsionslasche aufweist. In einer weiteren Ausgestaltung ist vorgesehen, dass vorzugsweise die Schenkel, in einer weiteren Ausgestaltung alternativ oder zusätzlich der Grund des Kabelführungsbauteils, zumindest eine, bevorzugt zumindest zwei Ausnehmungen für die Aufnahme von zumindest einer Torsionslasche und/oder zumindest eine, bevorzugt zumindest zwei, Torsionslaschen aufweist. In einer bevorzugten Ausgestaltung ist vorgesehen, dass ein Formbauteil, ausgebildet als Kabelführungsbauteil, einseitig zumindest eine Torsionslasche aufweist und auf der gegenüberliegenden Seite zumindest eine Ausnehmung für eine Torsionslasche aufweist. Vorteilhafterweise ist auf diese Weise sichergestellt, dass Kabelführungsbauteile miteinander kombiniert und verbunden werden können, insbesondere insofern, als dass gleich ausgestaltete Kabelkanäle mit zumindest einer Verbindungslasche auf der einen Seite und einer Ausnehmung auf der anderen Seite seriell hintereinander montierbar sind. In einer Ausgestaltung ist beispielsweise vorgesehen, dass ein Formbauteil, ausgestaltet als eine Abdeckung für einen Kabelführungsbauteil, zumindest eine, bevorzugt zumindest zwei Ausnehmungen für die Aufnahme von zumindest einer Torsionslasche und/oder zumindest eine, bevorzugt zumindest zwei, Torsionslaschen aufweist.

In einer beispielhaften Ausgestaltung ist vorgesehen, dass ein Kabelkanal zumindest zwei Kabelführungsbauteile umfasst. Vorzugsweise weisen die Kabelführungsbauteile ihren Enden zugeordnet bevorzugt in den Wandungen jeweils Ausnehmungen und Positionieröffnungen auf. Insbesondere sind die Ausnehmungen zur Aufnahme der Torsionslaschen ausgestaltet. Die Positionieröffnungen sind vorzugsweise zur Aufnahme der Positioniermittel ausgestaltet. In einer Ausgestaltung sind die Kabelführungsbauteile auf Stoß miteinander verbunden. In einer Ausführungsform greifen zumindest zwei Formbauteile mit ihren Torsionslaschen jeweils in die Ausnehmungen der Kabelführungsbauteile ein, dass diese miteinander zumindest formschlüssig, bevorzugt kraftschlüssig, verbunden sind. In einer Ausgestaltung ist vorgesehen, dass zumindest ein Kabelführungsbauteil als Eckbauteil ausgestaltet ist. Insbesondere wird mittels des Eckbauteils der Kabelkanal um etwa 45° bis etwa 90° umgelenkt. In einer Ausgestaltung ist vorgesehen, dass ein erstes Formbauteil insbesondere entlang der Materialschwächung um etwa 45° bis etwa 90° gebogen ausgestaltet ist, um vorzugsweise die im Winkel von etwa 45° bis 90° zueinander stehenden Wandungen der Kabelführungsbauteile miteinander zu verbinden. In einer weiteren Ausgestaltung ist vorgesehen, dass ein zweites Formbauteil ungebogen ausgestaltet ist und insbesondere grade stehende Wandungen der Kabelführungsbauteile miteinander verbindet. Bevorzugt werden die Torsionslaschen der Formbauteile, die mit den Kabelführungsbauteilen verbunden sind, tordiert, um eine form- und insbesondere kraftschlüssige Verbindung der Formbauteile mit den Kabelkanalbauteilen zu bewirken. Weiter bevorzugt sind zumindest zwei, bevorzugt vier, Positioniermittel vorgesehen, mittels denen ein definierter Formschluss des Formbauteils mit den Kabelkanalbauteilen gewährleistbar ist.

Das Formbauteil ist als Verbindungselement bzw. Verbinder zur Verbindung zweier Kabelführungsbauteile ausgestaltet. Insbesondere ist das Formbauteil ein im Wesentlichen flächiges Bauteil. In einer Ausführungsform ist das Formbauteil ein im Wesentlichen flächiges Bauteil, bei dem nur die Torsionslaschen und/oder die Positioniermittel über die Grundblechebene ragen.

Das oben beschriebene Formbauteil kann zur Verbindung mit zumindest einem Kabelführungsbauteil verwendet werden. In einer Ausführungsform wird das Formbauteil zur Verbindung zumindest zweier Kabelführungsbauteile verwendet.

Weiter vorteilhafte Ausgestaltungen gehen aus den nachfolgenden Figuren hervor. Die dort dargestellten Weiterbildungen sind jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile in gleicher Funktion weisen im Folgenden die gleichen Bezugszeichen auf. Es zeigen
- Fig. 1: ein Formbauteil in isometrischer Ansicht;
- Fig. 2: das Formbauteil aus Fig. 1 in einer Aufsicht;
- Fig. 3: das Formbauteil aus Fig. 2 im Schnitt III-III;
- Fig. 4: das Formbauteil aus Fig. 2 in der Ansicht IV-IV;
- Fig. 5: eine Detailansicht V aus Fig. 4;
- Fig. 6: ein System umfassend das Formbauteil sowie zwei Kabelführungsbauteile;
- Fig. 7: eine Detailansicht VII aus Fig. 1;
- Fig. 8: eine Aufsicht auf ein Formbauteil bei dem die Torsionslaschen und die Positioniermittel in der Grundblechebene angeordnet sind;
- Fig. 9: eine alternative Ausführungsform eines Formbauteils;
- Fig. 10: einen Kabelkanal;
- Fig. 11: ein Formbauteil eingesetzt als Werkzeug; und
- Fig. 12: eine Detailansicht aus Fig. 11.

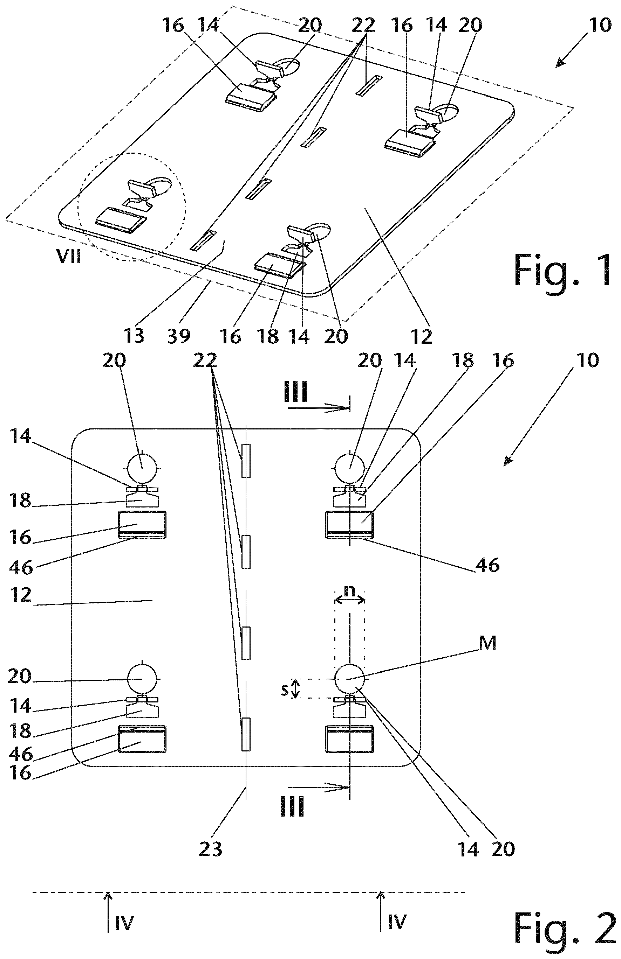

Fig. 1 zeigt in einer isometrischen Ansicht ein Formbauteil 10. Das Formbauteil 10 ist als Verbindungselement, auch als Verbinder bezeichnet, ausgestaltet. Dieses weist ein Grundblech 12 auf. Das Grundblech 12 umfasst eine Oberfläche 13, die in einer Grundblechebene 39 angeordnet ist. Aus dieser heraus erstrecken sich in der gezeigten Ausführungsform vier Torsionslaschen 14. Den Torsionslaschen sind jeweils Positioniermittel 16 und Schraublöcher 20 zugeordnet. Die Torsionslaschen 14 erstrecken sich im Wesentlichen senkrecht zur Grundblechebene 39 in die gleiche Richtung von der Grundblechoberfläche 13 weg. Die Positioniermittel 16 sind ebenfalls aus der Grundblechebene 39 hervorgehoben. Sowohl die Torsionslaschen 14 als auch die Positioniermittel 16 sind aus dem Material des Grundblechs 12 herausgelöst, insbesondere herausgestanzt. Durch Biegen der Torsionslaschen 14 aus der Grundblechebene 39 heraus sind Öffnungen 18 entstanden, die den Torsionslaschen 14 zugeordnet sind. Des Weiteren ist Fig. 1 zu entnehmen, dass das Grundblech eine Anzahl von rechteckigen durchgängigen Materialschwächungen 22 aufweist, die in einer geraden Linie angeordnet sind. Die Materialschwächungen 22 trennen jeweils zwei spiegelsymmetrisch zu einer durch die Materialschwächungen 22 gebildeten Deformationslinie 23 (s. Fig. 2) angeordneten Torsionslaschenpaare mit zugeordneten Positioniermitteln 16 und Schraublöchern 20. Insbesondere sind die Materialschwächungen 22 derart ausgestaltet, dass ein leichtes Biegen entlang der durch die Materialschwächungen 22 erzeugten Deformationslinie 23, die in Fig. 2 gezeigt ist, mit einem nicht gezeigten Handwerkzeug oder von Hand einfach möglich ist.

Fig. 2 zeigt eine Aufsicht auf das Formteil 10 aus Fig. 1. Auch dieser Ansicht ist zu entnehmen, dass das Grundblech 12 jeweils vier Torsionslaschen aufweist, denen jeweils ein Schraubloch 20 und ein Positioniermittel 16 als auch die Öffnung 18 zugeordnet ist.

Die Torsionslaschen 14 sind derart auf dem Grundblech 12 angeordnet, dass jeweils zwei Torsionslaschen spiegelsymmetrisch zueinander angeordnet sind, wobei insbesondere die Deformationslinie 23, die durch die Materialschwächung 22 gebildet ist, die Symmetrieachse bildet. Insbesondere ist der Fig. 2 zu entnehmen, dass die Öffnungen 18, aus denen die Torsionslaschen 14 herausgebogen sind, relativ zu den Torsionslaschen 14 jeweils in die gleiche Richtung weisend angeordnet sind. Des Weiteren sind die Positioniermittel jeweils den Öffnungen 18 zugeordnet. Auch die Ausgestaltung der Positioniermittel 16 ist derart, dass jeweils zwei Positioniermittel 16 entlang einer Symmetrieachse gespiegelt auf dem Grundblech 12 angeordnet sind. Insbesondere weisen die Positioniermittel 16 auf jeweils einer Seite der Deformationslinie 23 zueinander gerichtete Kantungen 46 auf. Die Kantungen 46 sind die Abschnitte der Positioniermittel 16, die derart umgebogen sind, dass die Positioniermittel 16 aus der Grundblechebene 39, die in Fig. 1 gezeigt ist, über das Grundblech 12 herausragen. Gleichzeitig ist die Kantung 46 der Abschnitt des Positioniermittels 16, der mit dem Grundblechmaterial verbunden ist.

Insbesondere kann eine Torsionslasche 14 als Verdrehschutz für eine nicht gezeigte Mutter oder Sechskantschraube ausgestaltet sein. Hierzu ist das Schraubloch 20 der Torsionslasche zugeordnet. Insbesondere ist der Abstand s vom Mittelpunkt M des Schraubloches 20 zur Torsionslasche 14 entsprechend einer halben Schlüsselweite, die dem Nenndurchmesser n des Schraublochs 20 gemäß DIN EN 24014 in Verbindung mit DIN EN 24017 von Februar 1992 zugeordnet ist.

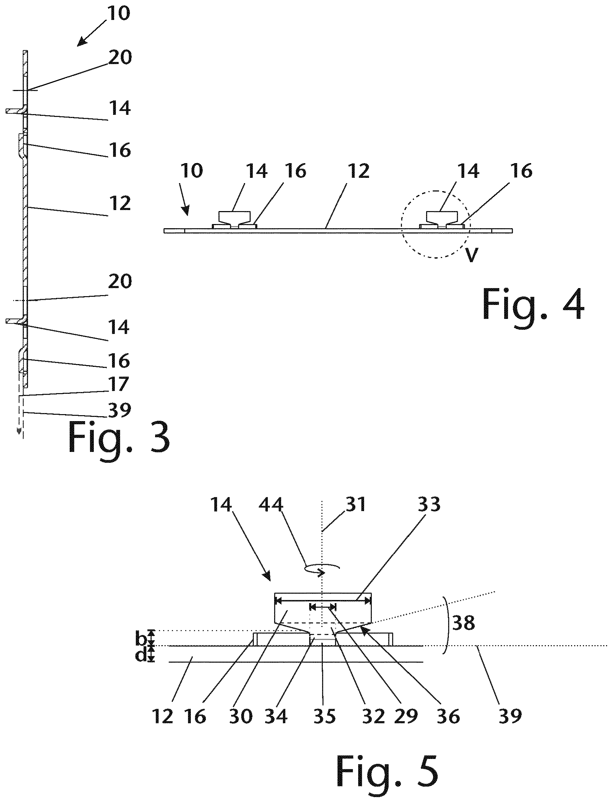

Fig. 3 zeigt eine Schnittansicht III-III aus Fig. 2 des Formbauteils 10. Fig. 3 ist zu entnehmen, dass die Torsionslaschen 14 mit dem Grundblech 12 materialverbunden sind, das heißt einstückig ausgestaltet. Auch die Positioniermittel 16 sind über eine Doppelbiegung mit dem Grundblech 12 materialverbunden, das heißt einstückig ausgestaltet. Die Schraublöcher 20 sind durchgängige Öffnungen, die in der gezeigten Ausführungsform kein Gewinde aufweisen. Der Fig. 3 ist des Weiteren zu entnehmen, dass die Positioniermittel 16 eine Erstreckung 17 aufweisen, die parallel zur Grundblechebene 39 ausgeführt ist.

Fig. 4 ist die Ansicht IV-IV aus Fig. 2 zu entnehmen. Diese zeigt das Formteil 10 mit dem Grundblech 12, von dessen durch die Oberfläche des Grundblechs 12 definierten Grundblechebene 39 sich die Torsionslaschen 14 und die Positioniermittel 16 weg erstrecken.

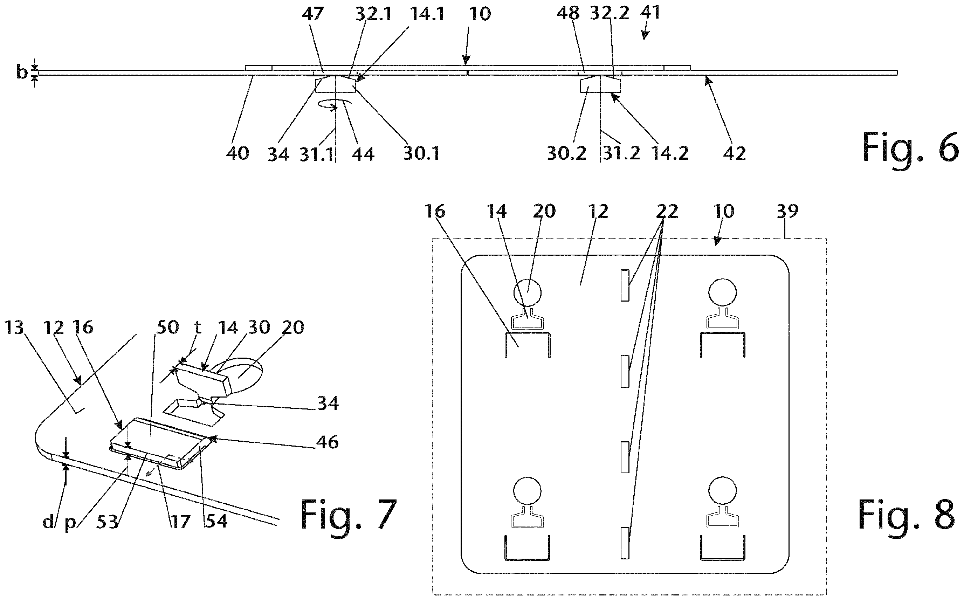

Fig. 5 zeigt eine Detailansicht V aus Fig. 4. Dieser Ansicht ist das Grundblech 12, das Positioniermittel 16 sowie die Torsionslasche 14 zu entnehmen. Die Torsionslasche 14 weist einen Torsionsbereich 34 und einen Laschenkopf 30 auf. Der Laschenkopf 30 weist eine maximale Erstreckung 33 auf, die wesentlich breiter ist als eine maximale Erstreckung 29 des Torsionsbereichs 34. Der Laschenkopf 30 weist einen Spannbereich 32 auf, der sich ausgehend vom Torsionsbereich 34 in Richtung der Mittellängsachse 31 von dem Torsionsbereich 34 weg vorzugsweise stetig verbreitert. In der gezeigten Ausführungsform sind die Wangen 36 des Spannbereichs 32 in einem Längsschnitt beziehungsweise in der gezeigten Aufsicht gerade angeordnet ausgeführt. Die Wangen 36 weisen einen Winkel 38 zur Grundblechebene 39 auf, der vorzugsweise etwa 12° bis etwa 28° beträgt. Der Torsionsbereich 34 umfasst einen Fußbereich 35, der eine Abkantung beziehungsweise ein gebogener Abschnitt ist, wobei der Fußbereich 35 mit dem Grundblech 12 einstückig beziehungsweise materialverbunden ist. Der Torsionsbereich 34 ist der Abschnitt der Torsionslasche 14, der sich bei der Tordierung 44 der Torsionslasche 14 um die Mittellängsachse 31 hauptsächlich verformt. Je nach Torsion 44 der Torsionslasche 14 kann eine Verformung auch im Laschenkopf 30, insbesondere im Spannbereich 32, bevorzugt in dem an den Torsionsbereich 34 angrenzenden Bereich des Spannbereich 32, erfolgen. Der Spannbereich 32 ist des Weiteren derart ausgestaltet, dass nach der Torsion 44 der Torsionslasche 14 zumindest in einen Teilbereich einen nicht gezeigten maximaler Abstand aufweist, der einer zu erwartenden Blechdicke b eines Kabelführungsbauteils 40, 42 entspricht, das mit dem Formteil 10 verbindbar und in Fig. 6 gezeigt ist. Das Kabelführungsbauteil ist plattenförmig skizziert, kann aber auch jede andere Form aufweisen. Durch die gezeigte Ausführungsform, insbesondere auch durch die winklig zur Grundblechebene 39 angeordnete Wange 36 des Spannbereichs 32, können unterschiedliche Kabelführungsbauteile 40, 42 mit unterschiedlichen Blechdicken b mit dem Formteil 10 verbunden werden. Die in den Figuren gezeigte Richtung der Torsion 44 ist willkürlich und kann auch entgegengesetzt erfolgen.

Fig. 6 zeigt ein System einer Blechkonstruktion 41, umfassend ein erstes Kabelführungsbauteil 40 und ein zweites Kabelführungsbauteil 42 sowie das Formbauteil 10. Das Formbauteil ist derart an die Kabelführungsbauteile 40 und 42 angeordnet, dass die Torsionslaschen 14.1 und 14.2 durch eine erste Ausnehmung 47 und eine zweite Ausnehmung 48 ragen. Die erste Torsionslasche 14.1 ragt hier dabei durch die erste Ausnehmung 47 des ersten Kabelführungsbauteils 40 und die zweite Torsionslasche 14.2 ragt durch die zweite Ausnehmung 48 des zweiten Kabelführungsbauteils 42. Die Kabelführungsbauteile 40 und 42 sind dabei auf Stoß miteinander verbunden. Zur form- und kraftschlüssigen Verbindung des Formteils mit den Kabelführungsbauteilen 40 und 42 werden die Torsionslaschen 14.1 und 14.2 in Pfeilrichtung oder entgegengesetzt der Pfeilrichtung 44 um die jeweilige Längsachse 31.1 und 31.2 tordiert. Die Spannbereiche der Torsionslaschen 14.1 und 14.2 und der Spannbereiche 32.1 und 32.2 wirken dabei auf die Kabelführungsbauteile 40 und 42.

Fig. 7 ist eine Detailansicht VII der Fig. 1 zu entnehmen. Aus dieser geht hervor, dass das Positioniermittel 16 eine Oberfläche 50 aufweist die sich in Richtung der Flächenerstreckung 17 erstreckt, die ebenfalls in Fig. 3 gezeigt ist, wobei die Oberfläche 50 des Positioniermittels 16 parallel zu einer Oberfläche 13 des Grundblechs 12 ist. Die Kante 53 erzeugt eine definierbarere Begrenzung des Positioniermittels 16 als die Abkantung 46, um eine definierte Positionierung insbesondere in dem Kabelführungsbauteil 40 oder 42 zu gewährleisten. Des Weiteren ist der Fig. 7 zu entnehmen, dass das Grundblech 12 eine Materialstärke d aufweist, die im Wesentlichen identisch mit der Materialstärke p des Positioniermittels 16 ist. Weiterhin weist die Torsionslasche 14 eine Materialstärke t auf, die im Wesentlichen identisch ist zur Materialstärke d des Grundblechs 12 ist. Die Materialstärke d des Laschenkopfs 30 und des Torsionsbereiches 34 ist im Wesentlichen gleich.

Fig. 8 zeigt das Formbauteil 10 in einer Variante, in der die Torsionslaschen 14 sowie die Positioniermittel 16 in der Grundblechebene 39 liegen, wobei in einer weiteren Ausführungsform die Positioniermittel 16 aber auch aus der Ebene 39 hervorragen können. Insbesondere sind die Torsionslaschen 14 und die Positioniermittel 16 sowie die Schraublöcher 20 und die Materialschwächung 22 vorzugsweise in einem Arbeitsschritt aus dem Grundblech 12 ausgestanzt. Eine Umbiegung beziehungsweise Abkantung der Torsionslaschen 14 und der Positioniermittel 16 ist nicht erfolgt. Dies reduziert insbesondere die Lagerhaltungskosten und die Versandkosten da ein derart ausgestaltetes Formteil wesentlich weniger Platz oder Raum bedarf. Die Positioniermittel 16 und/oder die Torsionslaschen 14 können je nach Bedarf am Ort des Einsatzes herausgebogen und montiert werden.

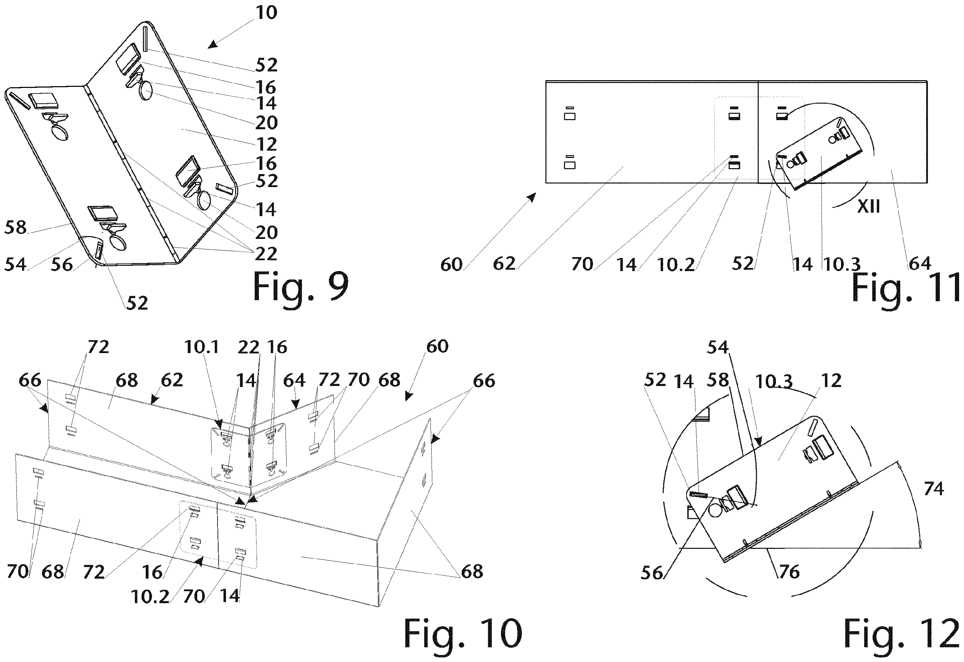

Fig. 9 zeigt eine alternative Ausführungsform eines Formbauteils 10, das neben den Torsionslaschen 14, den Positioniermitteln 16 und den Schraublöchern 20 auch Werkzeugöffnungen 52 aufweist. Die Werkzeugöffnungen 52 sind in der gezeigten Ausführungsform allen vier Ecken des Grundbleches 12 zugeordnet. Die Werkzeugöffnungen 52 sind rechteckig und länglich ausgestaltet, insbesondere derart, dass eine Torsionslasche 14 eines weiteren Formbauteils 10 durch die Werkzeugöffnung 52 durchsteckbar ist. Eine Längserstreckung 56 der Werkzeugöffnung 52 ist in einem Winkel 54 von etwa 45° zu einer Außenkante 58 des Grundbleches 12 angeordnet.

Fig. 10 zeigt einen Kabelkanal 60 umfassend zwei Kabelkanalbauteile 62 und 64. Die Kabelkanalbauteile 62 und 64 weisen ihren Enden 66 zugeordnet in den Wandungen 68 jeweils Ausnehmungen 70 und Positionieröffnungen 72 auf. Die Ausnehmungen 70 sind zur Aufnahme der Torsionslaschen 14 ausgestaltet. Die Positionieröffnungen 72 sind zur Aufnahme der Positioniermittel 16 ausgestaltet. Die beiden Kabelkanalbauteile 62 und 64 sind auf Stoß miteinander verbunden. Die Formbauteile 10.1 und 10.2 greifen mit ihren Torsionslaschen 14 jeweils in die Ausnehmungen 70 der Kabelkanalbauteile 62 und 64 ein, dass diese miteinander verbunden sind. Das Kabelkanalbauteil 64 ist als Eckbauteil ausgestaltet, mit dem der Kabelkanal 60 um etwa 90° umgelenkt wird. Das Formbauteil 10.1 ist entlang der Materialschwächung 22 um etwa 45° gebogen ausgestaltet, um die im Winkel von etwa 45° zueinander stehenden Wandungen 68 der Kanalbauteile 62 und 64 miteinander zu verbinden. Das Formbauteil 10.2, das gestrichelt angedeutet ist, ist ungebogen und verbindet in einer Flucht zueinander stehende Wandungen 68 der Kabelkanalbauteile 62 und 64 miteinander. Der Fig. 10 ist ein Zusammenbauzustand zu entnehmen, bei dem die Torsionslaschen 14 noch nicht tordiert wurden, um eine form- und kraftschlüssige Verbindung der Formbauteile mit den Kabelkanalbauteilen 62 und 64 zu bewirken.

Fig. 11 zeigt den Kabelkanal 60 aus Fig. 10 mit den Kabelkanalbauteilen 62 und 64 in einer Frontansicht. Das gestrichelt angedeutete Formbauteil 10.2 verbindet die beiden Kabelkanalbauteile 62 und 64, wobei die Torsionslaschen 14, die durch die Ausnehmungen 70 greifen, noch nicht tordiert sind. Ein weiteres Formbauteil 10.3 ist um die in Fig. 11 nicht gezeigte Materialschwächung um etwa 90° abgekantet. Die Werkzeugöffnung 52 des Formbauteils 10.3 greift eine Torsionslasche 14 des Formbauteiles 10.2.

Fig. 12 zeigt eine Detailansicht XII der Fig. 11. Zu erkennen ist, dass die Werkzeugöffnung 52 derart am Formbauteil angeordnet ist, dass eine Drehung des Formbauteils 10.3 um einen Winkel 74 von etwa 45°eine ausreichende Torsion der Torsionslasche 14 verursacht, um das Formbauteil 10.2 mit dem Kabelkanalbauteil 64 zu verspannen. Wie bereits in Fig. 9 angedeutet, ist eine Längserstreckung 56 der Werkzeugöffnung 52 in einem Winkel 54 von etwa 45° zu einer Außenkante 58 des Grundbleches 12 angeordnet. Insbesondere ist die Werkzeugöffnung 52 derart in das Grundblech 12 eingebracht, dass eine Drehung des Formbauteils 10.3 in eine waagerechte Position, das heißt eine Position, bei der die Außenkante 58 des Formbauteils 10.3 mit einer Bauteilkante 76 des Kabelkanals 60 im Wesentlichen parallel ist, eine ausreichende Torsion der Torsionslasche 14 verursacht, um das Formbauteil 10.2 mit dem Kabelkanalbauteil 64 zu verspannen.

Mit dem beschriebenen Formbauteil umfassend ein Grundblech und zumindest eine Torsionslasche, dem Verfahren zur Verbindung zumindest zweier Kabelführungsbauteile mit einem solchen als Verbindungselement ausgestalteten Formbauteil und dem System einer Blechkonstruktion zumindest umfassend ein erstes Kabelführungsbauteil, ein zweites Kabelführungsbauteil und zumindest ein als Verbindungselement ausgestaltetes Formbauteil kann in vorteilhafter Weise eine günstige Verbindung von Kabelführungsbauteilen, insbesondere Kabelkanälen, vorgenommen werden. Insbesondere werden keine zeit- und kostenaufwändigen Montageschritte benötigt, Kabelführungsbauteile miteinander zu verbinden.

## Patentansprüche

1. Formbauteil (10) als Verbindungselement zur Verbindung zweier Kabelführungsbauteile (40, 42) umfassend ein Grundblech (12) und zumindest zwei Torsionslaschen (14), wobei die Torsionslaschen (14) einen Torsionsbereich (34) und einen Laschenkopf (30) aufweisen, wobei eine Erstreckung (29) des Torsionsbereiches (34) senkrecht zu einer Mittellängsachse (31) der Torsionslaschen (14) kleiner ist als eine Erstreckung (33) des Laschenkopfes (30) senkrecht zu einer Mittellängsachse (31) der Torsionslaschen (14), und wobei der Laschenkopf (30) einen Spannbereich (32) umfasst und wobei die Torsionslaschen (14) aus dem Grundblech (12) herausgelöst sind und aus einer Grundblechebene (39) hervor ragen.

2. Formbauteil (10) nach Anspruch 1, **dadurch gekennzeichnet, dass** die mindestens zwei Torsionslaschen (14) mit dem Grundblech (12) einstückig verbunden sind.

3. Formbauteil (10) nach einem oder mehreren der vorhergehenden Ansprüche, **dadurch gekennzeichnet, dass** der Abstand (s) eines Mittelpunktes (M) eines Schraubloches (20) im Grundblech (12) zur untordierten Torsionslasche (14) etwa eine halbe Sechskant-Schlüsselweite beträgt, die mit einem Nenndurchmesser (n) des Schraubloches (20) korreliert.

4. Formbauteil (10) nach einem oder mehreren der vorhergehenden Ansprüche, **dadurch gekennzeichnet, dass** dieses zumindest ein Positioniermittel (16) umfasst, welches aus dem Grundblech (12) herausragt.

5. Formbauteil (10) nach einem oder mehreren der vorhergehenden Ansprüche, **dadurch gekennzeichnet, dass** das Grundblech (12) zwischen zumindest zwei Torsionslaschen (14) mindestens eine Materialschwächung (22) umfasst.

6. Formbauteil (10) nach einem oder mehreren der vorhergehenden Ansprüche, **dadurch gekennzeichnet, dass** das Formbauteil (10) als eine Kabelführung, ein Kabelkanal, eine Kabelrinne und/oder eine Kabelrinnenabdeckung ausgestaltet ist.

7. Formbauteil (10) nach einem oder mehreren der vorhergehenden Ansprüche, **dadurch gekennzeichnet, dass** das Grundblech (12) zumindest eine Werkzeugöffnung (52) zur Verdrehung einer Torsionslasche (14) eines zweiten Formbauteils (10) aufweist.

8. Verfahren zur Verbindung zumindest zweier Kabelführungsbauteile (40, 42) mit einem als Verbindungselement ausgestalteten Formbauteil (10) nach einem oder mehreren der Ansprüche 1 bis 7, wobei zumindest eine erste Torsionslasche (14.1) des Formbauteils (10) durch eine erste Ausnehmung (47) eines ersten Kabelführungsbauteils (40) geführt wird, wobei die erste Torsionslasche (14.1) um etwa 10° bis etwa 170° um ihre Mittellängsachse (31.1) tordiert wird, wobei ein Laschenkopf (30.1) der ersten Torsionslasche (14.1) derart mit dem ersten Kabelführungsbauteil (40) zusammenwirkt, dass der Laschenkopf (30.1) das erste Kabelführungsbauteil (40) mit einem Grundblech (12) des Formbauteils (10) verspannt und zumindest eine zweite Torsionslasche (14.2) des Formbauteils (10) durch eine zweite Ausnehmung (48) eines zweiten Kabelführungsbauteils (42) geführt wird, wobei die zweite Torsionslasche (14.2) um etwa 10° bis etwa 170° um ihre Mittellängsachse (31.2) tordiert wird, wobei der Laschenkopf (30.2) der zweiten Torsionslasche (14.2) derart mit dem zweiten Kabelführungsbauteil (42) zusammenwirkt, dass der Laschenkopf (30.2) das zweite Kabelführungsbauteil (42) mit dem Grundblech (12) des Formbauteils (10) verspannt.

9. Verfahren nach Anspruch 8, **dadurch gekennzeichnet, dass** das Formbauteil (10) vor dem Verbinden der Kabelführungsbauteile (40, 42) entlang einer Materialschwächung (22) umgebogen wird.

10. Verfahren nach einem oder mehreren der Ansprüche 8 bis 9, **dadurch gekennzeichnet, dass** eine Sechskantschaube oder eine Mutter, die einem Schaubloch (20) des Formbauteils (10) zugeordnet ist, mittels der untordierten Torsionslasche (14) verdrehsicher gehalten wird.

11. System einer Blechkonstruktion (41) zumindest umfassend ein erstes Kabelführungsbauteil (40), ein zweites Kabelführungsbauteil (42) und zumindest ein als Verbindungselement ausgestaltetes Formbauteil (10) ausgebildet gemäß einem oder mehreren der Ansprüche 1 bis 7, wobei zumindest eine erste Torsionslasche (14.1) des Formbauteils (10) durch zumindest eine erste Ausnehmung (47) eines ersten Kabelführungsbauteils (40) ragt und derart um etwa 10° bis etwa 170° um eine Mittellängsachse (31.1) tordiert ist, dass ein Laschenkopf (30.1) der ersten Torsionslasche (14.1) derart mit dem ersten Kabelführungsbauteil (40) zusammenwirkt, dass ein Grundblech (12) des Formbauteils (10) mit dem ersten Kabelführungsbauteil (40) verspannt ist, wobei zumindest eine zweite Torsionslasche (14.2) des Formbauteils (10) durch zumindest eine zweite Ausnehmung (48) des zweiten Kabelführungsbauteils (42) ragt und derart um etwa 10° bis etwa 170° tordiert ist, dass ein Laschenkopf (30.2) der zweiten Torsionslasche (14.2) derart mit dem zweiten Kabelführungsbauteil (42) zusammenwirkt, dass ein Grundblech (12) des Formbauteils (10) mit dem zweiten Kabelführungsbauteil (42) verspannt ist.

## Claims

1. Shaped component (10) as a connecting element for connecting two cable guide components (40,42) comprising a base metal-plate (12) and at least two torsion tabs (14), wherein the torsion tabs (14) include a torsion region (34) and a tab head (30), wherein an extension (29) of the torsion region (34) perpendicular to a central longitudinal axis (31) of the torsion tabs (14) is smaller than an extension (33) of the tab head (30) perpendicular to a central longitudinal axis (31) of the torsion tabs (14), and wherein the tab head (30) comprises a clamping region (32) and wherein the torsion tabs (14) are detached from the base metal plate (12) and project from a base plate plane (39).

2. Shaped component (10) according to claim 1, **characterized in that** the at least two torsion tabs (14) are connected to the base metal-plate (12) in a one-piece manner.

3. Shaped component (10) according to one or more of the preceding claims, **characterized in that** the distance (s) of a midpoint (M) of a screw hole (20) in the base metal plate (12) to the untwisted torsion tab (14) is approximately one-half of a hex-head wrench width, which correlates with a nominal diameter (n) of the screw hole (20).

4. Shaped component (10) according to one or more of the preceding claims, **characterized in that** it comprises at least one positioning means (16), which protrudes from the base metal-plate (12).

5. Shaped component (10) according to one or more of the preceding claims, **characterized in that** the base metal-plate (12) comprises at least one material-weakening (22) between at least two torsion tabs (14).

6. Shaped component (10) according to one or more of the preceding claims, **characterized in that** the shaped component (10) is designed as a cable guide, a cable channel, a cable gutter, and/or a cable-gutter covering.

7. Shaped component (10) according to one or more of the preceding claims, **characterized in that** the base metal-plate (12) includes at least one tool opening (52) for twisting of a torsion tab (14) of a second shaped component (10).

8. Method for connecting of at least two cable guide (40,42) components to a shaped component (10) designed as connecting element according to one or more of claims 1 to 7, wherein at least one first torsion tab (14.1) of the shaped component (10) is guided through a first opening (47) of a first cable guide (40) component, wherein the first torsion tab (14.1) is twisted by approximately 10° to approximately 170° around its central longitudinal axis (31.1), wherein a tab head (30.1) of the first torsion tab (14.1) interacts with the first cable guide component (40) such that the tab head (30.1) tension the first cable guide component (40) with a base metal-plate (12) of the shaped component (10) and at least a second torsion tab (14.2) of the shaped component (10) is guided through a second opening (48) of a second cable guide component (42), wherein the second torsion tab (14.2) is twisted by approximately 10° to approximately 170° around its central longitudinal axis (31.2), wherein the tab head (30.2) of the second torsion tab (14.2) interacts with the second cable guide component (42) such that the tab head (30.2) tension the second cable guide component (42) with the base metal-plate (12) of the shaped component (10).

9. Method according to claim 8, **characterized in that** the shaped component (10) is bent along a material-weakening (22) prior to the connecting of the cable guide components (40,42).

10. Method according to one or more of claims 8 to 9, **characterized in that** a hexagonal screw or a nut that is associated with a screw hole (20) of the shaped component (10), is held in a manner preventing conjoint rotation therewith by the untwisted torsion tab (14).

11. System of a sheet metal construction (41) at least comprising a first cable guide component (40), a second cable guide component (42) and at least one shaped component (10) designed as connecting element, formed according to one or more of claims 1 to 7, wherein at least one first torsion tab (14.1) of the shaped component (10) protrudes through at least one first opening (47) of a first cable guide component (40) and is twisted by approximately 10° to approximately 170° around a central longitudinal axis (31.1) such that a tab head (30.1) of the first torsion tab (14.1) interacts with the first cable guide component (40) such that a base metal-plate (12) of the shaped component (10) is tensioned with the first cable guide component (40), wherein at least one second torsion tab (14.2) of the shaped component (10) protrudes through at least one second opening (48) of the second cable guide component (42) and is twisted by approximately 10° to approximately 170° such that a tab head (30.2) of the second torsion tab (14.2) interacts with the second cable guide component (42) such that a base metal-plate (12) of the shaped component (10) is tensioned with the second cable guide (42) component.

## Revendications

1. Composant moulé (10) comme élément de connexion pour assembler deux éléments de guidage de câbles (40,42), comprenant une tôle de base (12) et au moins deux languettes de torsion (14), lesdites languettes de torsion (14) ayant une zone de torsion (34) et une tête de languette (30), une extension (29) de ladite zone de torsion (34) perpendiculaire à un axe longitudinal central (31) desdites languettes de torsion (14) est plus petite qu'une extension (33) de ladite tête de languette (30) perpendiculaire à un axe longitudinal central (31) desdites languettes de torsion (14), et ladite tête de languette (30) comprend une zone de serrage (32), et lesdites languettes de torsion (14) sont détachées de ladite tôle de base (12) et dépassent d'un plan (39) de ladite tôle de base.

2. Composant moulé (10) selon la revendication 1, **caractérisée en ce que** lesdites au moins deux languettes de torsion (14) sont assemblées en une seule pièce à ladite tôle de base (12).

3. Composant moulé (10) selon une ou plusieurs des revendications précédentes, **caractérisé en ce que** la distance (s) entre un point central (M) d'un trou de vis (20) et ladite languette de torsion (14) non tordue est approximativement une demi-clé hexagonale qui corrèle avec le diamètre nominal (n) dudit trou de vis (20).

4. Composant moulé (10) selon une ou plusieurs des revendications précédentes, **caractérisé en ce qu'**il comprend au moins un moyen de positionnement (16) qui dépasse de ladite tôle de base (12).

5. Composant moulé (10) selon une ou plusieurs des revendications précédentes, **caractérisé en ce que** ladite tôle de base (12) comprend au moins un affaiblissement du matériau (22) entre au moins deux languettes de torsion (14).

6. Composant moulé (10) selon une ou plusieurs des revendications précédentes, **caractérisé en ce que** ledit composant moulé (10) est conçu comme un acheminement de câble, un conduit de câble, un chemin de câble et/ou un couvercle de conduit de câble.

7. Composant moulé (10) selon une ou plusieurs des revendications précédentes, **caractérisé en ce que** ladite tôle de base (12) comporte au moins une ouverture d'outil (52) pour tordre une languette de torsion (14) d'un deuxième composant moulé (10).

8. Procédé pour assembler au moins deux éléments de guidage de câble (40,42) avec un composant moulé (10) conçu comme élément de liaison selon un ou plusieurs des revendications 1 à 7, dans lequel au moins une première languette de torsion (14.1) du composant (10) est guidé à travers un premier évidement (47) d'un premier élément de guidage de câble (40), dans lequel ladite première languette de torsion (14.1) est tordu d'environ 10° à environ 170° autour de son axe longitudinal central (31.1), dans lequel une tête de languette (30.1) de ladite première languette de torsion (14.1) coopère avec ledit premier élément de guidage de câble (40) de telle manière que la tête de languette (30.1) est serre le premier élément de guidage de câble (40) avec une tôle de base (12) du composant moulé (10), et au moins une deuxième languette de torsion (14.2) du composant moulé (10) est guidé à travers un deuxième évidement (48) d'un deuxième élément de guidage de câble (42), ladite languette de support (14.2) est tordue d'environ 10° à environ 170° autour de son axe longitudinal central (31.2), ladite tête de languette (30.2) de ladite deuxième languette de torsion (14.2) coopère avec ledit deuxième élément de guidage de câble (42) de telle sorte que ladite tête de languette (30.2) serre le dit deuxième élément de guidage du câble (42) avec ladite tôle de base (12) dudit composant moulé (10).

9. Procédé selon la revendication 8, **caractérisé en ce que** ledit composant moulé (10) est plié le long d'un affaiblissement du matériau (22) avant d'assembler lesdits éléments de guidage du câble (40, 42).

10. Procédé selon une ou plusieurs des revendications 8 à 9, **caractérisé en ce qu'**une vis hexagonale ou un écrou associé à un trou de vis (20) dudit composant moulée (10) est maintenu sans possibilité de rotation au moyen de ladite languette de torsion (14) non tordue.

11. Système de construction d'une tôle (41) comprenant au moins un premier élément de guidage de câble (40), un deuxième élément de guidage de câble (42) et au moins un composant moulé (10) conçu comme élément de liaison et construit selon une ou plusieurs des revendications 1 à 7, dans lequel au moins une première languette de torsion (14.1) dudit composant moulé (10) dépasse d'au moins un premier évidement (47) d'un premier élément de guidage de câble (40) et est tordu d'environ 10° à environ 170° autour d'un axe longitudinal central (31.1) de telle manière qu'une tête de languette (30.1) de ladite première languette de torsion (14.1) coopère avec ledit premier élément de guidage de câble (40) de telle sorte qu'une tôle de base (12) dudit composant moulé (10) est serrée avec ledit premier élément de guidage de câble (40), dans lequel au moins une deuxième languette de torsion (14.2) dudit composant moulé (10) dépasse d'au moins un deuxième évidement (48) dudit deuxième élément de guidage de câble (42) et est tordue d'environ 10° à environ 170° de telle sorte qu'une tête de languette (30.2) de la dite deuxième languette de torsion (14.2) coopère avec le deuxième élément de guidage de câble (42) de telle sorte qu'une tôle de base (12) dudit composant moulé (10) est serrée avec ledit deuxième élément de guidage de câble (42).
